(19) Europäisches Patentamt
European Patent Office
Office européen des brevets

(11) **EP 2 998 412 B1**

(12) **EUROPEAN PATENT SPECIFICATION**

(45) Date of publication and mention
of the grant of the patent:
**06.11.2019 Bulletin 2019/45**

(51) Int Cl.:
*C22C 21/02* [(2006.01)]        *C22F 1/04* [(2006.01)]
*C22F 1/043* [(2006.01)]

(21) Application number: **13884783.5**

(22) Date of filing: **14.05.2013**

(86) International application number:
**PCT/JP2013/063454**

(87) International publication number:
**WO 2014/184880 (20.11.2014 Gazette 2014/47)**

(54) **METHOD FOR MANUFACTURING AN ALUMINUM ALLOY MATERIAL, THE SINGLE LAYER OF WHICH ALLOWS THERMAL BONDING**

VERFAHREN ZUR HERSTELLUNG EINES ALUMINIUMLEGIERUNGSMATERIALS, DESSEN EINZELSCHICHT THERMISCHES BONDEN ERMÖGLICHT

PROCÉDÉ DE FABRIQUER UN MATÉRIAU D'ALLIAGE D'ALUMINIUM, DONT UNE COUCHE UNIQUE PERMET UNE FIXATION THERMIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.03.2016 Bulletin 2016/12**

(73) Proprietor: **UACJ Corporation**
**Tokyo 100-0004 (JP)**

(72) Inventors:
• **KUROSAKI Tomohito**
**Tokyo 100-0004 (JP)**
• **NIIKURA Akio**
**Tokyo 100-0004 (JP)**
• **TERAYAMA Kazuko**
**Tokyo 100-0004 (JP)**
• **MURASE Takashi**
**Tokyo 100-0004 (JP)**
• **MATSUI Yu**
**Tokyo 100-0004 (JP)**
• **MOCHIDUKI Junichi**
**Tokyo 100-0004 (JP)**
• **ARAKI Toshio**
**Tokyo 100-0004 (JP)**

(74) Representative: **Maikowski & Ninnemann**
**Patentanwälte Partnerschaft mbB**
**Postfach 15 09 20**
**10671 Berlin (DE)**

(56) References cited:
**WO-A1-2006/003899      WO-A1-2013/080650**
**JP-A- S63 278 643      JP-A- 2003 034 851**
**JP-A- 2007 517 986      JP-A- 2012 051 028**
**JP-A- 2012 051 028**

• **N.N.: "Rolling Aluminum: From the Mine Through the Mill", , 1 December 2007 (2007-12-01), pages 41-42, XP055325910, Retrieved from the Internet: URL:http://www.aluminum.org/sites/default/ files/Rolling_Aluminum_From_The_Mine_Throu gh_The_Mill.pdf [retrieved on 2016-12-05]**
• **S.A. LOCKYER ET AL: "Micro- and macrodefects in thin sheet twin-roll cast aluminum alloys", MATERIALS CHARACTERIZATION., vol. 37, no. 5, 1 November 1996 (1996-11-01), pages 301-310, XP055325917, US ISSN: 1044-5803, DOI: 10.1016/S1044-5803(97)80019-8**

## Description

Technical Field

The present invention relates to an aluminum alloy material that comes in itself into a semi-molten state to be able to supply a liquid phase necessary for bonding, and that can be thermally bonded in a single layer to another member without using a bonding agent, such as a brazing or welding filler metal. The present invention also relates to a manufacturing method for the aluminum alloy material, and an aluminum bonded body using the aluminum alloy material. More particularly, the present invention relates to an aluminum alloy material capable of being thermally bonded in a single layer with good deformation resistance under heating for the bonding, a manufacturing method for the aluminum alloy material, and an aluminum bonded body using the aluminum alloy material.

Background Art

In manufacturing a structure of such as a heat exchanger, which employs an aluminum alloy material as a constituent member, it is required to bond the aluminum alloy materials with each other or to bond the aluminum alloy material and a different type of material with each other. There are known various types of methods for bonding the aluminum alloy material. Among those methods, a brazing process (hard soldering process) is used in many cases. The reason why the brazing process is used in many cases resides in an advantage that strong bonding can be obtained in a short time without melting a parent material. As methods of manufacturing a heat exchanger, etc. by bonding the aluminum alloy materials with each other with the brazing process, there are known, e.g., a method of employing a brazing sheet that is formed by cladding a brazing filler metal made of an Al-Si alloy on a core of the brazing sheet; a method of employing an extruded material coated with a powdery brazing filler metal; and a method of, after assembling various component members, coating a brazing filler metal over portions of the members where they are to be bonded (see Patent Documents 1 to 3). Furthermore, Chapter "3.2 Brazing Alloys and Brazing Sheets" of Non- Patent Document 1 explains the clad brazing sheet and the powdery brazing filler metal referred to above in detail.

Various brazing processes have been developed so far in the field of manufacturing of structures made of aluminum alloy materials. For example, in the field of an automobile heat exchanger, when a fin material is used in a single layer, there have been practiced a method of employing a brazing sheet that is formed by cladding a brazing filler metal on a core layer, as a tube material, or a method of coating Si powder or a brazing alloy containing Si over a tube material. On the other hand, when a tube material is used in a single layer, there has been practiced a method of employing a brazing sheet that is formed by cladding a brazing filler metal on a core layer, as a fin material.

Patent Document 4 discloses a method of employing a single-layer brazing sheet instead of the above-mentioned brazing sheet that includes the clad material. The disclosed method proposes that the single-layer brazing sheet is used as a tube material and a tank material of the heat exchanger. The aluminum alloy material which is called in Patent Document 4 as the "single-layer brazing sheet" and used in a MONOBRAZE process is referred to in the present invention as an "aluminum alloy material having a thermal bonding function in a single layer".

Patent Document 5 proposes, in relation to a method for manufacturing a bonded body with use of the aluminum alloy material in a single layer, a bonding method that can provide satisfactory bonding state without substantially causing deformation of the aluminum alloy material by controlling an alloy composition and conditions such as temperature, pressure, surface properties and so on during the bonding. In the present invention, the bonding method disclosed in Patent Document 5 is referred to as the "MONOBRAZE process".

Patent Document 6 proposes a structure having satisfactory bonding performance by employing a single-layer aluminum alloy as a tube material, and by controlling sizes of grains dispersed in the tube material when a heat exchanger is manufactured by the MONOBRAZE process.

Citation List

Patent Documents

Patent Document 1: JP 2008-303405 A
Patent Document 2: JP 2009-161835 A
Patent Document 3: JP 2008-308760 A
Patent Document 4: JP 2010-168613 A
Patent Document 5: JP 5021097 B
Patent Document 6: JP 2012-51028 A

Non-Patent Documents

Non-Patent Document 1: "Aluminum Brazing Handbook (Revised)" THE JAPAN LIGHT METAL WELDING AND CONSTRUCTION ASSOCIATION 2003

Manufacturing the clad material like the brazing sheet needs steps of separately manufacturing individual layers, and bonding those layers in a stacked state. The use of the brazing sheet is contradictory to a demand for reduction of the costs of heat exchangers, etc. Coating of the powdery brazing filler metal is also reflected on the product cost to such an extent of the cost of the brazing filler metal.

On the other hand, it is also proposed, as discussed above, to employ the aluminum alloy material having the thermal bonding function in a single layer instead of the brazing sheet as the clad material. The proposed method is intended to keep the shape of a structure while a liquid phase necessary for the bonding is supplied from the aluminum alloy material having the thermal bonding function in a single layer. However, when the aluminum alloy material having the thermal bonding function in a single layer is used, as it is, as a tube material or a fin material in manufacturing a heat exchanger, there is a risk that the aluminum alloy material may be greatly deformed due to heating in the manufacturing.

There is further proposed a method for realizing both a good bonding performance and a shape keeping in the bonding using the aluminum alloy material having the thermal bonding function in a single layer by controlling an alloy composition and conditions such as temperature, pressure, surface properties and so on during the bonding as in the MONOBRAZE process referred to above. However, bonding with higher accuracy and achievement of more reliable keeping of the shape during the bonding are demanded. In particular, a fin material with a plate thickness of 1 mm or less tends to deform with bending stress in the thickness direction of the plate, and a liquid phase rate needs to be held low in order to prevent the deformation during the bonding. However, because the volume of the material is small, a liquid phase is hard to be sufficiently generated at a low liquid phase rate. Thus, a further improvement is demanded to realize both satisfactory bonding performance and shape keeping at the same time.

As discussed above, it can be said that the MONOBRAZE process of bonding materials in the form of a single layer with each other without using a brazing filler metal is preferred from the viewpoint of reducing the cost of an aluminum alloy structure such as a heat exchanger. However, even if the aluminum alloy material having the thermal bonding function in a single layer is simply applied to the MONOBRAZE process, it is difficult to avoid the problems with deformation of the member and reduction in a bonding rate. In Patent Documents 4 and 6 cited above, the aluminum alloy material in a single layer is applied to the tube material in the form of a comparatively thick plate, and deformation is not so significant. However, when the aluminum alloy material in a single layer is applied to a member in the form of a thin plate, such as a fin material, there is a problem that deformation during heating for the bonding is significant.

Summary of Invention

Technical Problem

In view of the background described above, the present invention has been made to propose a single-layer aluminum alloy material for use in manufacturing various types of aluminum alloy bonded bodies using the single-layer aluminum alloy material by the MONOBRAZE process, the aluminum alloy material being heated to temperature higher than the solidus temperature and made into a semi-molten state during heating for bonding to supply a liquid phase to a junction while exhibiting good deformation resistance. The present invention further proposes a manufacturing method for the aluminum alloy material, and an aluminum bonded body using the aluminum alloy material. In particular, the present invention is suitably applied to a material in the form of a thin plate, such as a fin material for a heat exchanger.

Solution to Problem

As a result of conducting intensive studies with intent to solve the above-mentioned problems, the inventors have accomplished the present invention by trying to improve the aluminum alloy material used in the MONOBRAZE process, and by finding the aluminum alloy material having good deformation resistance during the heating for bonding in spite of being heated to temperature higher than the solidus temperature and made into a semi-molten state during the heating for the bonding.

The present invention provides the method for manufacturing an aluminum alloy material as defined in claim 1 diameters of 5.0 to 10 $\mu$m.

An amount of solid solution Si contained in the aluminum alloy is not more than 0.7 %.

Preferably, the aluminum alloy further comprises at least one of Mg: 0.05 to 2.0 mass %, Cu: 0.05 to 1.5 mass%, and Mn: 0.05 to 2.0 mass%.

Preferably, the aluminum alloy further comprises at least one of Zn: 6.0 mass% or less, In: 0.3 mass% or less, and Sn: 0.3 mass% or less.

Preferably, the aluminum alloy further comprises at least one of Ti: 0.3 mass% or less, V: 0.3 mass% or less, Cr: 0.3 mass% or less, Ni: 2.0 mass% or less, and Zr: 0.3 mass% or less.

Preferably, the aluminum alloy further comprises at least one of Be: 0.1 mass% or less, Sr: 0.1 mass% or less, Bi: 0.1 mass% or less, Na: 0.1 mass% or less, and Ca: 0.05 mass% or less.

Tensile strength of the aluminum alloy before thermal bonding is 80 to 250 MPa.

The method of the present invention allows to provide an aluminum bonded body manufactured by thermally bonding two or more aluminum members, wherein the aluminum alloy material as described above is used as at least one of the two or more aluminum members.

Grain sizes in a metal structure of the aluminum alloy material used as at least one of the two or more aluminum members are 100 $\mu$m or more after the thermal bonding.

Advantageous Effects of Invention

The aluminum alloy material produced by the method according to the present invention (which is meant by "The aluminium alloy material according to the present invention" below) has the thermal bonding function in a single layer unlike the materials used in the related-art bonding methods such as the brazing process, and it can be bonded in a state of the single layer to various types of bonding target members. Furthermore, the aluminum alloy material has good deformation resistance in spite of being made into the semi-molten state during the heating for the bonding. As a result, the aluminum alloy material can satisfy the demand for cost reduction in manufacturing of the bonded body. The aluminum alloy material is useful as a very thin material like a fin material for a heat exchanger, for example. The aluminum alloy material can be further applied to products for which a higher level is demanded in accuracy of bonding performance and dimensions. Moreover, it is possible to realize not only manufacturing of a bonded body having a shape that cannot be obtained with the related-art bonding methods, but also thinning of individual parts and component members.

Brief Description of the Drawings

[Fig. 1] Fig. 1 is an explanatory view to explain a cooling rate of molten aluminum poured between rolls in a twin-roll continuous casting and rolling method.

[Fig. 2] Fig. 2 is an explanatory view to explain a cooling rate of molten aluminum poured between rolls in a twin-roll continuous casting and rolling method.

[Fig. 3] Fig. 3 is an external view of a 3-stage stacked test piece (mini-core) used in first to third embodiments.

Description of Embodiments

1. Aluminum Alloy Material Having Thermal Bonding Function with Single Layer

The present invention will be described in detail below. An aluminum alloy material having a thermal bonding function in a single layer, according to the present invention, is first described. The aluminum alloy material having the thermal bonding function in a single layer has a basic composition of an Al-Si-Fe-based aluminum alloy containing, as essential elements, Si: 1.0 to 5.0 mass% (hereinafter abbreviated to "%") and Fe: 0.01 to 2.0 % with the balance Al and inevitable impurities. In the metallographic structure, the aluminum alloy material contains Al-based intermetallic compounds having equivalent circle diameters of 0.01 to 0.5 $\mu$m. Those features are described in detail below.

1-1. Regarding Essential Elements

1-1-1. Regarding Si Composition

Looking at Si composition, Si is an element that generates an Al-Si-based liquid phase, and that contributes to bonding. However, if the Si composition is less than 1.0 %, the liquid phase could not be generated in a sufficient amount, and seeping of the liquid phase would be insufficient, thus resulting in incomplete bonding. On the other hand, if the Si composition is more than 5.0 %, an amount of the liquid phase generated in the aluminum alloy material would increase, and material strength during heating would reduce extremely, thus resulting in a difficulty in keeping the shape of a structure. Accordingly, the Si composition is specified to 1.0 % to 5.0 %. The Si composition is preferably 1.5 % to 3.5 % and more preferably 2.0 % to 3.0 %. Because the amount of the seeping liquid phase increases as the volume increases and a heating temperature rises, it is desired that the amount of the liquid phase required during the heating is controlled by adjusting the required Si amount and the heating temperature required in the bonding depending on the configuration of a structure to be manufactured.

1-1-2. Regarding Fe Composition

Looking at Fe composition, Fe has not only an effect of increasing strength by being dissolved a little in a solid state into a matrix, but also an effect of preventing reduction of strength particularly at high temperature by being dispersed as crystallized matters and precipitates. If an amount of added Fe is less than 0.01 %, the above-mentioned effects would be reduced, and a base metal with high purity would have to be used, thus resulting in an increase of the cost. If the amount of added Fe is more than 2.0 %, coarse intermetallic compounds would be generated during the casting, thus generating a problem with manufacturability. Furthermore, if the bonded body is exposed to a corrosive environment (particularly, to a corrosive environment where a liquid flows), corrosion resistance would reduce. In addition, grains recrystallized due to the heating for the bonding would become finer, and a grain boundary density would increase, thus resulting in significant dimensional change between before and after the bonding. Accordingly, the amount of added Fe is set to 0.01 % to 2.0 %. Preferably, the amount of added Fe is 0.2 %, to 1.0 %.

1-2. Regarding Al-based Intermetallic Compounds

The features in the metallographic structure of the aluminum alloy material according to the present invention are described below. The aluminum alloy material according to the present invention is heated to temperature higher than the solidus temperature during the heating for the bonding by the MONOBRAZE process. On that occasion, the aluminum alloy material is deformed mainly due to grain boundary sliding. In view of the above point, the metallographic structure of the aluminum alloy material preferably has the following features; (1) the sizes of grains are increased during the heating for the bonding, and (2) generation of a liquid phase at the grain boundary is suppressed because deformation is more likely to occur due to the grain boundary sliding if the liquid phase is generated at the grain boundary. In the present invention, the metallographic structure is specified in which the crystal grains after the heating become coarser, and in which generation of the liquid phase at the grain boundary is suppressed.

More specifically, in the aluminum alloy material having the thermal bonding function in a single layer, according to the present invention, the Al-based intermetallic compounds having the equivalent circle diameters of 0.01 to 0.5 $\mu$m are present as dispersed grains. The Al-based intermetallic compounds are intermetallic compounds formed by Al and one or more added elements, such as Al-Fe-based, Al-Fe-Si-based, Al-Mn-Si based, Al-Fe-Mn-based, and Al-Fe-Mn-Si-based compounds. The Al-based intermetallic compounds having the equivalent circle diameters of 0.01 to 0.5 $\mu$m do not serve as recrystallization nuclei during the heating, and they function as pinning grains that suppress growth of the grain boundary. Furthermore, those Al-based intermetallic compounds serve as nuclei for generating of the liquid phase and function to collect solid solution Si in the grains. Thus, since the aluminum alloy material according to the present invention contains the Al-based intermetallic compounds having the equivalent circle diameters of 0.01 to 0.5 $\mu$m, recrystallization nuclei are suppressed from growing in infinite number during the heating, and only a limited number of recrystallization nuclei are allowed to grow. As a result, the crystal grains after the heating become coarser. Furthermore, since the solid solution Si in the grains is collected, the generation of the liquid phase at the grain boundary is relatively suppressed.

1-2-1. Regarding Volume Density of Al-based Intermetallic Compounds

The above-described effects of the Al-based intermetallic compounds are reliably developed on condition that a volume density of the Al-based intermetallic compounds is within a proper range. More specifically, in an arbitrary portion of the material, the Al-based intermetallic compounds are present at the volume density of 10 to $1 \times 10^4$ pieces/$\mu$m$^3$. If the volume density is less than 10 pieces/$\mu$m$^3$, the pinning effect would be so small that the number of recrystallization nuclei capable of growing would be too large and coarse crystal grains would be difficult to be formed. Moreover, because of a decrease in the number of nuclei for generation of the liquid phase, the action of collecting the solid solution Si in the grains would be not sufficiently developed, and a rate of contribution of the solid solution Si in the grains to growth of the liquid phase generated at the grain boundary would be increased, thus resulting in reduction of the deformation resistance. On the other hand, if the volume density is more than $1 \times 10^4$ pieces/$\mu$m$^3$, the pinning effect would be too large, and growth of all the recrystallization grains is suppressed, whereby coarse crystal grains would be difficult to be formed. Moreover, because of too many nuclei for the generation of the liquid phase, the liquid phase directly contacting the grain boundary would be increased, and the liquid phase at the grain boundary would be grown to a large extent. Thus, the volume density is set to the above-mentioned range in order to allow growth of only the limited crystal grains with a proper level of the pinning effect, thereby increasing the grain sizes, and to properly form the nuclei for the generation of the liquid phase, thereby collecting the solid solution Si in the grains and suppressing the generation of the liquid phase at the grain boundary. The volume density is preferably 50 to $5 \times 10^3$ pieces/$\mu$m$^3$ and more preferably 100 to $1 \times 10^3$ pieces/$\mu$m$^3$.

1-2-2. Regarding Equivalent Circle Diameter of Al-based Intermetallic Compounds

Al-based intermetallic compounds having the equivalent circle diameters less than 0.01 $\mu$m are excluded from discussion because they are difficult to measure in practice. Although Al-based intermetallic compounds having the equivalent circle diameters more than 0.5 $\mu$m are present, those Al-based intermetallic compounds are also excluded from specified range because they hardly effectively act as pinning grains and their influences upon the advantageous effects of the present invention are so small as to be ignorable. The Al-based intermetallic compounds having the equivalent circle diameters more than 0.5 $\mu$m are able to act as the nuclei for the generation of the liquid phase. However, the effect of collecting the solid solution Si in the grains is determined depending on the distance from the compound surface. Thus, another reason of excluding the Al-based intermetallic compounds having the equivalent circle diameters more than 0.5 $\mu$m from the specified range resides in that the effect of collecting the solid solution Si per unit volume of those compounds is reduced.

The equivalent circle diameters of the Al-based intermetallic compounds can be determined by observing a sample, which has been thinned by electrolytic polishing, with a TEM. Here, the term "equivalent circle diameter" means a diameter of a circle equivalent to a compound grain. Preferably, the equivalent circle diameters before the bonding are determined by analyzing a TEM-observed image in the form of a two-dimensional image like an SEM-observed image. In order to calculate the volume density, the film thickness of the sample is further measured in each visual field, for which the TEM-image has been observed, by the EELS method, for example. After analyzing the TEM-observed image in the form of a two-dimensional image, a measured area of the two-dimensional image is multiplied by the film thickness measured by the EELS method to determine the volume having been subjected to the measurement. The volume density is then calculated. If the film thickness of the sample is too thick, a difficulty would arise in accurately performing the measurement because of an increase in the number of grains that are overlapped with each other in the transmitting direction of electrons. Accordingly, it is desirable to observe a sample portion having a film thickness in the range of 50 nm to 200 nm. The Si-based intermetallic compounds and the Al-based intermetallic compounds can be more accurately discriminated from each other through an element analysis using EDS, for example.

With the above-described aluminum alloy material having the thermal bonding function in a single layer, according to the present invention, which is featured in the composition ranges of Si and Fe and the metallographic structure, the aluminum alloy material comes in itself into a semi-molten state during the heating for the bonding to supply the liquid phase, thus enabling the bonding to be performed, and exhibits good deformation resistance.

1-3. Regarding Si-based Intermetallic Compounds

The aluminum alloy material according to the present invention undergoes not only the above-described restrictions specified for the Al-based intermetallic compounds, but also restrictions specified for the Si-based intermetallic compounds. In the aluminum alloy material according to the present invention, the Si-based intermetallic compounds having equivalent circle diameters of 5.0 to 10 $\mu$m are present 200 pieces/mm$^2$ or less in a material section. Here, the Si-based intermetallic compounds include (1) elemental Si, and (2) elemental Si partly containing Ca, P and other elements. The term "material section" means an arbitrary section of the aluminum alloy material, and it may be, for example, a section taken along the thickness direction of a plate or a section taken parallel to the plate surface. The section taken along the thickness direction is preferably used from the viewpoint of convenience in material evaluation.

1-3-1. Regarding Surface Density of Si-based Intermetallic Compounds

The Si-based intermetallic compounds having the equivalent circle diameters of 5.0 $\mu$m to 10 $\mu$m become nuclei for recrystallization during the heating. Therefore, if the surface density of the Si-based intermetallic compounds is more than 200 pieces/mm$^2$, the number of the recrystallization nuclei would be increased and the crystal grains would become finer, thus resulting in reduction of the deformation resistance during the heating for bonding. When the surface density of the Si-based intermetallic compounds is 200 pieces/mm$^2$ or less, the number of the recrystallization nuclei is small, and only particular crystal grains are allowed to grow. As a result, coarse crystal grains are obtained, and the deformation resistance during the heating for the bonding is improved. The above-mentioned surface density is preferably not more than 20 pieces/mm$^2$. Because the deformation resistance is further improved at the smaller number of the Si-based intermetallic compounds having the equivalent circle diameters of 5.0 $\mu$m to 10 $\mu$m, the above-mentioned surface density is most preferably 0 pieces/mm$^2$.

1-3-2. Regarding Equivalent Circle Diameters of Si-based Intermetallic Compounds

The reason why the equivalent circle diameters of the Si-based intermetallic compounds are limited to 5.0 $\mu$m to 10 $\mu$m is as follows. Although Si-based intermetallic compounds having the equivalent circle diameters less than 5.0 $\mu$m are present, those Si-based intermetallic compounds are excluded from the specified range because they hardly act as recrystallization nuclei. Si-based intermetallic compounds having the equivalent circle diameters more than 10 $\mu$m cause cracking in manufacturing and raise a difficulty in practicing the manufacturing. Thus, the Si-based intermetallic compounds having the equivalent circle diameters of so large values are not to be contained in the aluminum alloy material, and hence those Si-based intermetallic compounds are also excluded from the specified range.

The equivalent circle diameters of the Si-based intermetallic compounds can be determined by observing a section with an SEM (i.e., by observing an image of reflected electrons). Here, the term "equivalent circle diameter" means a diameter of a circle equivalent to a compound grain. Preferably, the equivalent circle diameters of dispersed grains before the bonding are determined through image analysis of an SEM photograph. The surface density can be calculated from the result of the image analysis and the measured area. The Si-based intermetallic compounds and the Al-based intermetallic compounds can be discriminated from each other depending on shades of contrast with observation of an SEM - reflected-electron image. The metal species of the dispersed grains can be accurately specified by an EPMA (X-ray Micro-Analyzer), for example.

1-4. Regarding Amount of Solid Solution Si

In the aluminum alloy material according to the present invention, an amount of solid solution Si is further restricted in addition to the above-described restrictions on the Al-based intermetallic compounds and the Si-based intermetallic compounds. In the aluminum alloy material according to the present invention, the amount of the solid solution Si is preferably not more than 0.7 % before the bonding by the MONOBRAZE process. The amount of the solid solution Si is a value measured at room temperature of 20 to 30 °C. As discussed above, the solid solution Si diffuses into the solid phase during the heating and contributes to growth of the surrounding liquid phase. When the amount of the solid solution Si is not more than 0.7 %, the amount of the liquid phase generating at the grain boundary due to diffusion of the solid solution Si is reduced, and deformation during the heating can be suppressed. On the other hand, if the amount of the solid solution Si is more than 0.7 %, the number of Si entrapped into the liquid phase generating at the grain boundary would increase. As a result, the amount of the liquid phase generating at the grain boundary would increase, and deformation would be more likely to occur. A more preferred amount of the solid solution Si is not more than 0.6 %. While a lower limit value of the amount of the solid solution Si is not set to particularly one, it is necessarily determined depending on the Si content of the aluminum alloy material and the manufacturing method, and is 0 % in the present invention.

1-5. Regarding First Selective Additional Element

As discussed above, the aluminum alloy material having the thermal bonding function in a single layer, according to the present invention, contains the predetermined amounts of Si and Fe as essential elements to improve the deformation resistance during the heating for the bonding. To further enhance the strength, one or more selected from Mn, Mg and Cu are also added in predetermined amounts, as first selective additional elements, in addition to Si and Fe that are essential elements. Even when the aluminum alloy material contains the first selective additional element(s), the volume density of the Al-based intermetallic compounds and the surface density of the Si-based intermetallic compounds are specified as described above.

1-5-1. Regarding Mn

Mn is an important additional element that forms Al-Mn-Si-based, Al-Mn-Fe-Si-based, and Al-Mn-Fe-based intermetallic compounds together with Si and Fe, and that enhances the strength through the action of dispersion strengthening, or through solid solution strengthening by dissolving in a solid state into the aluminum parent phase. If the amount of added Mn is more than 2.0 %, coarse intermetallic compounds would more likely to be formed, and corrosion resistance would degrade. On the other hand, if the amount of added Mn is less than 0.05 %, the above-mentioned effect would be insufficient. Accordingly, the amount of added Mn is set to 0.05 % to 2.0 % or less. The preferred amount of added Mn is 0.1 % to 1.5 %.

1-5-2. Regarding Mg

Mg develops age hardening with formation of $Mg_2Si$ after the heating for the bonding, and enhances the strength due to the age hardening. Thus, Mg is an additional element that exhibits the effect of enhancing the strength. If the amount of added Mg is more than 2.0 %, Mg would react with flux and would form refractory compounds, thus resulting in great reduction of bonding performance. On the other hand, if the amount of added Mg is less than 0.05 %, the above-mentioned effect would be insufficient. Accordingly, the amount of added Mg is set to 0.05 % to 2.0 %. The preferred amount of added Mg is 0.1 % to 1.5 %.

1-5-3. Regarding Cu

Cu is an additional element that enhances the strength by dissolving in a solid state into the matrix. If the amount of added Cu is more than 1.5 %, the corrosion resistance would degrade. On the other hand, if the amount of added Cu is less than 0.05 %, the above-mentioned effect would be insufficient. Accordingly, the amount of added Cu is set to 0.05 % to 1.5 %. The preferred amount of added Cu is 0.1 % to 1.0 %.

1-6. Regarding Second Selective Additional Element

In the present invention, to further improve the corrosion resistance, one or more selected from Zn, In and Sn are also added in predetermined amounts, as second selective additional elements, in addition to the above-described essential elements and the first selective additional element(s). Even when the aluminum alloy material contains the second selective additional element(s), the volume density of the Al-based intermetallic compounds and the surface density of the Si-based intermetallic compounds are specified as described above.

1-6-1. Regarding Zn

Addition of Zn is effective in improving the corrosion resistance due to the sacrificial anti-corrosion action. Zn almost uniformly dissolves in a solid state into the matrix. However, when a liquid phase is generated, Zn dissolves into the liquid phase, and the composition of Zn in the liquid phase increases. Upon the liquid phase seeping up to the surface, the composition of Zn in a seeped portion increases, and the corrosion resistance increases due to the sacrificial anti-corrosion action. Moreover, when the aluminum alloy material of the present invention is applied to a heat exchanger, the sacrificial anti-corrosion action for protecting tubes, etc. against corrosion can be obtained by employing the aluminum alloy material of the present invention as fins. If the amount of added Zn is more than 6.0 %, a corrosion rate would increase and self-corrosion resistance would degrade. Accordingly, the amount of added Zn is set to 6.0 % or less. The preferred amount of added Zn is 0.05 % to 6.0%.

1-6-2. Regarding Sn and In

Sn and In are effective in developing the sacrificial anti-corrosion action. If the amount of each of added Sn and In is more than 0.3 %, the corrosion rate would increase and the self-corrosion resistance would degrade. Accordingly, the amount of each of added Sn and In is set to 0.3 % or less. The preferred amount of each of added Sn and In is 0.05 % to 0.3 %.

1-7. Regarding Third Selective Additional Element

In the present invention, to further improve the strength and the corrosion resistance, one or more selected from Ti, V, Cr, Ni and Zr are also added in predetermined amounts, as third selective additional elements, in addition to the above-described essential elements and at least one of the first selective additional elements and the second selective additional elements. Even when the aluminum alloy material contains the third selective additional element(s), the volume density of the Al-based intermetallic compounds and the surface density of the Si-based intermetallic compounds are specified as described above.

1-7-1. Regarding Ti and V

Ti and V are effective in not only enhancing the strength by dissolving in a solid state into the matrix, but also in preventing the progress of corrosion in the thickness direction of the plate by distributing in the form of a layer. If the amount of each of added Ti and V is more than 0.3 %, coarse crystallized matters would be generated, thus impeding formability and the corrosion resistance. Accordingly, the amount of each of added Ti and V is set to 0.3 % or less. The preferred amount of each of added Ti and V is 0.05 % to 0.3 %.

### 1-7-2. Regarding Cr

Cr enhances the strength through solid solution strengthening and acts to increase the crystal grains after the heating due to precipitation of Al-Cr-based intermetallic compounds. If the amount of added Cr is more than 0.3 %, coarse intermetallic compounds would be more likely to be formed, thus degrading plastic workability. Accordingly, the amount of added Cr is set to 0.3 % or less. The preferred amount of added Cr is 0.05 % to 0.3 %.

### 1-7-3. Regarding Ni

Ni is crystallized or precipitated as intermetallic compounds and is effective in enhancing the strength after the bonding through dispersion strengthening. The amount of added Ni is set to 2.0 % or less and preferably to 0.05 % to 2.0 %. If the content of Ni is more than 2.0 %, coarse intermetallic compounds would be more likely to be formed, thus degrading workability and reducing the self-corrosion resistance.

### 1-7-4. Regarding Zr

Zr is precipitated as Al-Zr-based intermetallic compounds and is effective in enhancing the strength after the bonding through dispersion strengthening. Furthermore, the Al-Zr-based intermetallic compounds act to increase the sizes of the crystal grains during the heating. If the amount of added Zr is more than 0.3 %, coarse intermetallic compounds would be more likely to be formed, thus degrading the plastic workability. Accordingly, the amount of added Zr is set to 0.3 % or less. The preferred amount of added Zr is 0.05 % to 0.3 %.

### 1-8. Regarding Fourth Selective Additional Element

In the aluminum alloy material according to the present invention, to improve characteristics of the liquid phase and to further enhance the bonding performance, one or more selected from Be, Sr, Bi, Na and Ca may also be added in predetermined amounts, as fourth selective additional elements, in addition to the above-described essential elements and at least one of the first to third selective additional elements. Even when the aluminum alloy material contains the fourth selective additional element(s), the volume density of the Al-based intermetallic compounds and the surface density of the Si-based intermetallic compounds are specified as described above.

At least one of those elements are added, as required, in respective amounts of Be: 0.1 % or less, Sr: 0.1 % or less, Bi: 0.1 % or less, Na: 0.1 % or less, and Ca: 0.05 % or less. The preferred content ranges of those elements are as follows; Be: 0.0001 % to 0.1 %, Sr: 0.0001 % to 0.1 %, Bi: 0.0001 % to 0.1 %, Na: 0.0001 % to 0.1 % or less, and Ca: 0.0001 % to 0.05 % or less. Those trace elements are able to improve the bonding performance by improving fine dispersion of Si grains, fluidity of the liquid phase, etc. If the contents of those trace elements are less than the above-mentioned preferred ranges, the effects in improving the fine dispersion of Si grains, the fluidity of the liquid phase, etc. would be insufficient in some cases. On the other hand, if the contents of those trace elements are more than the above-mentioned preferred ranges, reduction of the corrosion resistance and other drawbacks would occur.

### 1-9. Relation among Contents of Si, Fe and Mn

Fe and Mn form Al-Fe-Mn-Si-based intermetallic compounds together with Si. Because Si forming the Al-Fe-Mn-Si-based intermetallic compounds contributes a little to the generation of the liquid phase, the presence of that type of Si may degrade the bonding performance. Therefore, due consideration is desirably to be paid to the contents of Si, Fe and Mn when Fe and Mn are added to the aluminum alloy material according to the present invention. More specifically, given that the contents (mass%) of Si, Fe and Mn are denoted respectively by S, F and M, a relational formula of $1.2 \leq S - 0.3(F+M) \leq 3.5$ is preferably satisfied. If $S - 0.3(F+M)$ is less than 1.2, the bonding would be insufficient. On the other hand, if $S - 0.3(F+M)$ is more than 3.5, a shape is more likely to deform between before and after the bonding.

### 1-10. Regarding Solidus and Liquidus of Material

In the aluminum alloy material generating the liquid phase according to the present invention, the difference between the solidus temperature and the liquidus temperature is preferably not less than 10 °C. The generation of the liquid phase starts upon exceeding the solidus temperature. However, if the difference between the solidus temperature and the liquidus temperature is small, a temperature range where a solid and a liquid coexist is narrowed, and a difficulty arises in controlling the amount of the generated liquid phase. Accordingly, that difference is preferably set to 10 °C or more. Alloys having compositions satisfying the above-described conditions are, for example, an Al-Si-based alloy, an Al-Si-Mg-based alloy, an Al-Si-Cu-based alloy, an Al-Si-Zn-based alloy, and an Al-Si-Cu-Mg-based alloy. As the difference between the solidus temperature and the liquidus temperature increases, it is easier to control the amount of the liquid phase to a proper value. Hence an upper limit of the difference between the solidus temperature and the liquidus temperature is not set to a particular value.

1-11. Tensile Strength before Bonding by MONOBRAZE Process

In the aluminum alloy material according to the present invention, tensile strength before the bonding by the MONOBRAZE process is preferably 80 to 250 MPa. If the tensile strength is less than 80 MPa, the strength necessary for forming the material into the product shape would be insufficient, and the forming into the product shape could not be practiced. If the tensile strength is more than 250 MPa, shape sustainability after the forming would be poor, and a gap would be generated relative to another member when a bonded body is assembled, thus resulting in degradation of the bonding performance. The tensile strength before the bonding by the MONOBRAZE process means a value measured at room temperature of 20 to 30 °C. Furthermore, a ratio (T/TO) of the tensile strength (T0) before the bonding by the MONOBRAZE process to tensile strength (T) after the bonding is preferably in a range of 0.6 to 1.1. If (T/TO) is less than 0.6, the material strength would be insufficient and the function as a structure would be lost in some cases. If (T/TO) is more than 1.1, precipitation at the grain boundary would be excessive and intergranular corrosion would be more likely to occur in some cases.

2. Manufacturing Method for Aluminum Alloy Material having Thermal Bonding Function in Single Layer

A manufacturing method for the aluminum alloy material having the thermal bonding function in a single layer, according to the present invention, will be described below. The aluminum alloy material according to the present invention is manufactured by a continuous casting method. In the continuous casting method, because a cooling rate during solidification is high, coarse crystallized matters are hard to be formed, and formation of the Si-based intermetallic compounds having the equivalent circle diameters of 5.0 $\mu$m to 10 $\mu$m is suppressed. Consequently, the number of recrystallization nuclei can be reduced, and only particular crystal grains are allowed to grow, whereby coarse crystal grains are obtained. Furthermore, because amounts of Mn and Fe dissolved in a solid state are increased, formation of the Al-based intermetallic compounds having the equivalent circle diameters of 0.01 $\mu$m to 0.5 $\mu$m is promoted in the subsequent working step. Thus, the Al-based intermetallic compounds having the equivalent circle diameters of 0.01 $\mu$m to 0.5 $\mu$m are formed which can provide a proper level of the pinning effect and the effect of collecting the solid solution Si in the grains. As a result, only the limited crystal grains are allowed to grow, coarse crystal grains are obtained, and the generation of the liquid phase at the grain boundary is suppressed. Hence the deformation resistance is improved.
Moreover, in the continuous casting method, the amount of the solid solution Si in the matrix is reduced due to the formation of the Al-based intermetallic compounds having the equivalent circle diameters of 0.01 $\mu$m to 0.5 $\mu$m. As a result, the amount of the solid solution Si supplied to the grain boundary during the heating for the bonding is further reduced. Correspondingly, the generation of the liquid phase at the grain boundary is suppressed, and the deformation resistance is improved. The continuous casting method limited to particular one insofar as a plate-shaped slab is continuously cast by the method, such a method of continuously casting a casting a <<amendment-opener class='deletion amendmentHighlight workingcopy'> by the twin-roll continuous casting and rolling method but not by the twin-belt continuous casting method. In the twin-roll continuous casting and rolling method, a thin plate is continuously cast and rolled by supplying molten aluminum to a space between a pair of water-cooled rolls from a molten-metal supply nozzle made of a refractory substance. The Hunter process and the 3C process are known as examples of the twin-roll continuous casting and rolling method. The twin-belt continuous casting method is a continuous casting method comprising the steps of pouring molten metal to a space between rotating belts that are water-cooled and are arranged in vertically opposing relation, solidifying the molten metal through cooling from belt surfaces, to thereby obtain a slab, continuously withdrawing the slab from the side opposite to the pouring side with respect to the belts, and winding up the slab into the form of a coil.
In the twin-roll continuous casting and rolling method, the cooling rate during the casting is several times to several hundred times faster than that in a semi-continuous casting method. For example, the cooling rate in the semi-continuous casting is 0.5 to 20 °C/sec, whereas the cooling rate in the twin-roll continuous casting and rolling method is 100 to 1000 °C/sec. Therefore, the twin-roll continuous casting and rolling casting method is featured in that dispersed grains generated during the casing are distributed in finer sizes and at a higher density than in the semi-continuous casting method. As a result, generation of coarse crystallized matters is suppressed, and the sizes of the crystal grains during the heating for the bonding are increased. Furthermore, since the cooling rate is fast, the amount of the added elements dissolved in a solid state can be increased. This enables finer precipitates to be formed in subsequent heat treatment, and hence contributes to increasing the sizes of the crystal grains during the heating for the bonding. In the present invention, the cooling rate in the twin-roll continuous casting and rolling casting method is preferably set to 100 to 1000 °C/sec. If the cooling rate is less than 100 °C/sec, the objective metallographic structure would be difficult to obtain. If the cooling rate is more than 1000 °C/sec, stable manufacturing would be difficult to realize.

The speed of a rolled plate during the casting in the twin-roll continuous casting and rolling casting method is preferably 0.5 to 3 m/min. The casting speed affects the cooling rate. If the casting speed is less than 0.5 m/min, the above-mentioned satisfactory cooling rate could not be obtained, and compound sizes would be increased. If the casting speed is more than 3 m/min, the aluminum material would not be sufficiently solidified between the rolls during the casting, and a normal plate-shaped slab could not be obtained.

The temperature of the molten metal in the casting by the twin-roll continuous casting and rolling method is preferably in a range of 650 to 800 °C. The temperature of the molten metal is measured as the temperature of a head box disposed just upstream of the molten-metal supply nozzle. If the temperature of the molten metal is lower than 650 °C, dispersed grains of coarse intermetallic compounds would be generated in the molten-metal supply nozzle, and mixing of those dispersed grains into a slab would cause discontinuity of a plate during the cold rolling. If the temperature of the molten metal is higher than 800 °C, the aluminum material would not be sufficiently solidified between the rolls during the casting, and a normal plate-shaped slab could not be obtained. A more preferable range of the temperature of the molten metal is 680 to 750 °C.

The thickness of the plate-shaped slab cast by the twin-roll continuous casting and rolling method is preferably 2 mm to 10 mm. In such a thickness range, the solidification rate in a central portion of a plate in the thickness direction is also high, and a uniform structure is easily obtained. If the plate thickness is less than 2 mm, the amount of aluminum passing through a casting machine per unit time would be reduced, and a difficulty would arise in stably supplying the molten metal in the width direction of the plate. On the other hand, if the plate thickness is more than 10 mm, a difficulty would arise in winding up the plate by a roll. A more preferable thickness of the plate-shaped slab is 4 mm to 8 mm.

During a process of cold-rolling the plate-shaped slab, which has been cast by the twin-roll continuous casting and rolling method, into a final plate thickness, annealing is executed for 1 to 10 hours at 250 to 550 °C. The annealing may be executed in any step except for final cold rolling in the manufacturing process after the casting, but it needs to be executed once or more. An upper limit of the number of times of the annealing is preferably three and more preferably two. The annealing is executed to soften the material such that the desired material strength can be easily obtained in the final rolling. With the annealing, it is possible to optimally adjust the sizes and the densities of the intermetallic compounds in the material and the amounts of the added elements dissolved in a solid state therein. If the annealing temperature is lower than 250 °C, softening of the material would be insufficient, and TS before the heating for the brazing would be high. If TS before the heating for the brazing is high, formability would deteriorate and core dimensions would degrade, thus resulting in reduction of durability. On the other hand, if the annealing is executed at temperature higher than 550 °C, a heat input into the material during the manufacturing process would be excessive, and intermetallic compounds would be distributed sparsely in coarse forms. The intermetallic compounds distributed sparsely in coarse forms are hard to take in the solid solution elements, and the solid solution amount in the material are hard to reduce. Furthermore, if the annealing time is shorter than 1 hour, the above-mentioned effect would be insufficient. If the annealing time is longer than 10 hours, the above-mentioned effect would be saturated, and economical efficiency would be reduced.

Thermal refining may be executed into an O or H material. When an H1n or H2n material is to be obtained, a final cold reduction rate is important. The final cold reduction rate is 50 % or less, and a preferable range of the final cold reduction rate is 5 % to 50 %. If the final cold reduction rate is more than 50 %, recrystallization nuclei would be generated in large number during the heating, and the grain sizes after the heating for the bonding would be too small. If the final cold reduction rate is less than 5 %, manufacturing would be difficult to implement practically in some cases.

2-1. Control of Intermetallic Compound Density in Twin-roll Continuous Casting and Rolling Method

Through the above-described twin-roll continuous casting and rolling method and the subsequent manufacturing process, dispersed grains can be made finer than those in the semi-continuous casting. To obtain the metallographic structure of the aluminum alloy material according to the present invention, however, it is important to more accurately control the cooling rate during the solidification. The inventors have found that the more accurate control of the cooling rate can be realized by controlling the thickness of an aluminum coating and by controlling a molten metal sump with a rolling load.

2-1-1. Control of Thickness of Aluminum Coating

The term "aluminum coating" means a coating made of aluminum and aluminum oxide as main compositions. The aluminum coating formed on the roll surface during the casting increases wetting of the molten metal with respect to the roll surface, and improves heat transfer between the roll surface and the molten metal. In order to form the aluminum coating, the twin-roll continuous casting and rolling may be executed on molten aluminum at 680 to 740 °C under the rolling load of 500 N/mm or more. Alternatively, an aluminum alloy plate for an expanded material, which has been heated to 300 °C or higher before starting the twin-roll continuous casting and rolling, may be rolled twice or more at a reduction rate of 20 % or more. The molten aluminum or the aluminum alloy plate used to form the aluminum coating is especially preferably a 1000 series alloy containing the additional elements in less amounts. However, the aluminum coating can also be formed by employing another series of aluminum alloy. The thickness of the aluminum coating continuously increases during the casting. Therefore, further formation of the aluminum coating is suppressed by coating a boron nitride-based or carbon-based parting agent (graphite spray or soot) over the roll surface at a density of 10 $\mu$g/cm$^2$. As an alternative, the aluminum coating may be physically removed with a brushing roll, for example.

The thickness of the aluminum coating is set to 1 to 500 $\mu$m. In such a thickness range, the cooling rate of the molten metal is optimally adjusted, and the aluminum alloy can be cast at the density of intermetallic compounds and in the amount of the solid solution Si, which are suitable for providing good deformation resistance during the heating for the bonding. If the thickness of the aluminum coating is less than 1 $\mu$m, wettability between the roll surface and the molten metal would be poor, and a contact area between the roll surface and the molten metal would be reduced. Accordingly, heat transference between the roll surface and the molten metal would deteriorate, and the cooling rate of the molten metal would reduce. As a result, the intermetallic compounds would become coarser, and the desired density of the intermetallic compounds could not be obtained. Moreover, if the wettability between the roll surface and the molten metal is poor, the roll surface and the molten metal would not be contacted locally with each other. Such a case may lead to a risk that, with re-smelting of the slab, the molten metal having a high solute concentration may seep to the surface of the cast slab to cause surface segregation, and coarse intermetallic compounds may be formed in the slab surface. On the other hand, if the thickness of the aluminum coating is more than 500 $\mu$m, the wettability between the roll surface and the molten metal would be improved, but thermal conductivity between the roll surface and the molten metal would be greatly reduced because of the coating being too thick. Consequently, also in the above-mentioned case, the cooling rate of the molten metal would reduce. Hence the intermetallic compounds would become coarser, and the desired density of the intermetallic compounds and the desired amount of solid solution Si could not be obtained. A more preferable range of the thickness of the aluminum coating is 80 to 410 $\mu$m.

2-1-2. Control of Molten Metal Sump with Rolling Load

Inherently, the density of the intermetallic compounds in a continuously cast plate is desirably regulated by controlling the cooling rate during the solidification. However, measuring the cooling rate during the casting is very difficult, and it is required to control the density of the intermetallic compounds by employing a parameter that can be measured on-line.

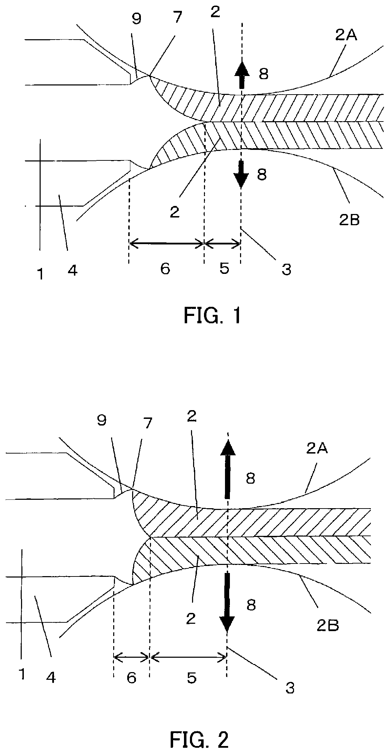

The twin-roll continuous casting and rolling method is carried out, as illustrated in Figs. 1 and 2, by pouring, through a nozzle tip 4 made of a refractory material, a molten aluminum alloy 1 into a region 2 that is surrounded by metal-made cooling rolls 2A and 2B arranged in a vertically opposing relation, a roll centerline 3, and by an outlet of a nozzle tip 4. During the continuous casting, the region 2 can be mainly divided into a rolling region 5 and a non-rolling region 6. The aluminum alloy in the rolling region 5 is in the form of a slab after completion of the solidification, and a roll separating force is generated upon loading applied to the rolls. On the other hand, the aluminum alloy in the non-rolling region 6 is in such a state that the solidification is completed in its portion near the rolls, but its central portion in the thickness direction is present as the molten metal not yet solidified. Therefore, no roll separating force is generated. The position of a solidification start point 7 is hardly moved even when casting conditions are changed. Accordingly, by increasing the casting speed or by raising the temperature of the molten metal so as to reduce the rolling region 5 as illustrated in Fig. 1, the molten metal sump is deepened and hence the cooling rate is reduced. To the contrary, by decreasing the casting speed or by lowering the temperature of the molten metal so as to enlarge the rolling region 5 as illustrated in Fig. 2, the molten metal sump is shallowed and hence the cooling rate is increased. Thus, the cooling rate can be controlled by increasing or reducing the rolling region, namely by measuring a rolling load 8 that is a vertical component of the roll separating force. The term "molten metal sump" means a solid-liquid interface between a solidified portion and not-solidified portion during the casting. When the solid-liquid interface deeply enters in the rolling direction and forms a valley-like shape, such a state is expressed by saying the sump being deep. Conversely, when the solid-liquid interface does not deeply enter in the rolling direction and forms a nearly flat interface, such a state is expressed by saying the sump being shallow.

The rolling load is set to 500 to 5000 N/mm. If the rolling load is less than 500 N/mm, this would bring about a state that the rolling region 5 is small and the molten metal sump is deep as illustrated in Fig. 1. Accordingly, the cooling rate would be reduced, coarse crystallized matters would be more likely to be formed, and fine precipitates would be hard to be formed. As a result, the number of recrystallization grains growing from the coarse crystallized matters as nuclei would be increased during the heating for the bonding, the crystal grains would become finer, and deformation would be more likely to occur. Furthermore, because the fine precipitates would be sparse, the proper pinning effect could not be obtained, and the amount of the solid solution Si would be increased. Hence the liquid phase generated at the grain boundary during the heating for the bonding would be increased, and deformation would be more likely to occur. In addition, solute atoms would be concentrated in the central portion in the thickness direction, thus causing centerline segregation.

On the other hand, if the rolling load is more than 5000 N/mm, this would bring about a state that the rolling region 5 is large and the molten metal sump is shallow as illustrated in Fig. 2. Accordingly, the cooling rate would be excessively increased, and a distribution of the Al-based intermetallic compounds would be excessively dense. As a result, the pinning effect would be excessively developed during the heating for the bonding, the crystal grains would become finer, and deformation would be more likely to occur. Furthermore, because the amount of heat releasing from the roll surface would be large, solidification would progress up to the molten metal (in a meniscus portion 9) that is not contacted with the roll surface. Therefore, supply of the molten metal during the casting would be insufficient, and a ripple would be deepened, thus causing surface defects in the slab surface. Those surface defects might be start points of causing cracks during the rolling.

2-2. Method of Measuring Rolling Load

In the twin-roll continuous casting and rolling method, there generate a force pushing the roll from the slab during the casting, and a constant force applied to the upper and lower rolls for a period from a time before the casting until the end of the casting. The sum of those two forces can be measured as a component parallel to the roll centerline by a hydraulic cylinder. Accordingly, the rolling load can be determined through the steps of converting an increase of cylinder pressure between before the casting and during the casting to a force, and dividing the converted force by the width of a cast plate. For example, when the number of cylinders is two, the cylinder diameter is 600 mm, the pressure increase of one cylinder is 4 MPa, and the width of a rolled plate during the casting is 1500 mm, the rolling load per unit width of the plate-shaped slab is calculated as 1508 N/mm from the following formula:

$$4 \times 300^2 \times \pi \div 1500 \times 2 = 1508 \text{ N/mm}$$

3. Aluminum Bonded Body Using Aluminum Alloy Material Having Thermal Bonding Function in Single Layer

An aluminum bonded body according to the present invention will be described below. In the present invention, the aluminum bonded body is manufactured by the MONOBRAZE process utilizing a bonding ability, which is developed by the aluminum alloy material itself, without employing any brazing filler metal. In the present invention, the aluminum bonded body is a bonded body in which two or more members are bonded to each other, and in which at least one of the member constituting the bonded body is made of the aluminum alloy material according to the present invention. The other one or more members may be made of the aluminum alloy material according to the present invention, or may be made of another type of aluminum alloy material or a pure aluminum material. The manufacturing method for the aluminum bonded body according to the present invention is carried out by combining the aluminum alloy material according to the present invention, as at least one of the two more members to be bonded, with the other one or more members to be bonded, and then by executing heat treatment to bond those members to be bonded. Considering, for example, the case where the aluminum alloy material according to the present invention is utilized as a fin material in a heat exchanger, deformation of the fin material is a serious problem. It is hence also important to manage bonding conditions in the MONOBRAZE process. More specifically, the heating is performed for a time necessary for the bonding at temperature that is in a range not lower than the solidus temperature and not higher than the liquidus temperature where the liquid phase is generated inside the aluminum alloy material according to the present invention, and that is not higher than temperature at which the liquid phase is generated inside the aluminum alloy material and the strength is reduced to such as extent as not sustaining the shape of the aluminum alloy material.

As a more specific heating condition, the bonding needs to be performed at temperature at which a ratio of the mass of the liquid phase generated inside the aluminum alloy material to the total mass of the aluminum alloy material (hereinafter referred to as a "liquid phase rate") is more than 0 % and not more than 35 %. Because the bonding cannot be performed unless the liquid phase is generated, the liquid phase ratio needs to be more than 0 %. However, if the amount of the liquid phase is small, the bonding would be difficult to practice. Accordingly, the liquid phase ratio is preferably set to 5 % or more. If the liquid phase ratio is more than 35 %, the amount of the generated liquid phase would be too much, and the aluminum alloy material would be deformed during the heating for the bonding to such a large extent as not sustaining the shape. A more preferable range of the liquid phase ratio is 5 to 30 %, and an even more preferable range thereof is 10 to 20 %.

To ensure that the liquid phase is fully filled between the members to be bonded, a filling time is also preferably taken into consideration. A time during which the liquid phase ratio is not less than 5 % is preferably 30 to 3600 sec. More preferably, the time during which the liquid phase ratio is not less than 5 % is 60 to 1800 sec. As a result, the liquid phase is more sufficiently filled, and more reliable bonding is performed. If the time during which the liquid phase ratio is not less than 5 % is shorter than 30 sec, the liquid phase would not be sufficiently filled into a junction in some cases. On the other hand, if it is longer than 3600 sec, deformation of the aluminum material would progress in some cases. In the bonding method according to the present invention, because the liquid phase is drifted just in the very close vicinity of the junction, the time necessary for filling of the liquid phase does not depend on the size of the junction.

In the case of the aluminum alloy material according to the present invention, practical examples of the desired heating conditions are set such that the bonding temperature is 580 to 640 °C, and that a holding time at the bonding temperature is about 0 to 10 min. Here, 0 min means that the cooling is started immediately as soon as a temperature of the member reaches the predetermined bonding temperature. The holding time is more preferably 30 sec to 5 min. Regarding the bonding temperature, when the Si amount is about 1 to 1.5 %, for example, the heating temperature for the bonding is desirably set to be slightly higher, i.e., 610 to 640 °C. Conversely, when the Si amount is about 4 to 5 %, the heating temperature for the bonding is desirably set to be slightly lower, i.e., 580 to 590 °C. To make the metallographic structure in the junction turn to a suitable state described later, the heating conditions may be adjusted depending on the composition.

It is very difficult to measure the actual liquid phase ratio during the heating. Therefore, the liquid phase ratio specified in the present invention is usually determined on the basis of the lever rule from an alloy composition and a maximum achieving temperature by utilizing an equilibrium state diagram. For an alloy system for which the equilibrium state diagram is already clarified, the liquid phase ratio can be determined on the basis of the lever rule by employing that equilibrium state diagram. On the other hand, for an alloy system for which the equilibrium state diagram is not yet publicized, the liquid phase ratio can be determined by utilizing software for calculating the equilibrium state diagram. The equilibrium state diagram calculation software includes procedures for determining the liquid phase ratio on the basis of the lever rule by employing the alloy composition and temperature. One example of the equilibrium state diagram calculation software is Thermo-Calc made by Thermo-Calc Software AB. Even for the alloy system for which the equilibrium state diagram is already clarified, the equilibrium state diagram calculation software may be utilized for the sake of simplification because the result of calculating the liquid phase ratio with the equilibrium state diagram calculation software is the same as the result of determining the liquid phase ratio on the basis of the lever rule by employing the equilibrium state diagram.

A heating atmosphere in the heat treatment is preferably, e.g., a non-oxidizing atmosphere substituted with nitrogen or argon, for example. More satisfactory bonding performance can be obtained by employing a non-corrosive flux. The bonding can also be performed with the heating in vacuum or under depressurization.

The non-corrosive flux can be coated, for example, by a method of, after assembling the members to be bonded, spraying flux powder over the assembled members, or by a method of making flux powder suspended in water and spraying the suspended water to be coated over the members. When the non-corrosive flux is previously painted over a material member, adhesivity of a painted film can be increased by mixing the flux powder with a binder made of acrylic resin, for example, and by painting the mixture. Examples of the non-corrosive flux, which is used to obtain the ordinary function of the flux, include fluorine fluxes such as $KAlF_4$, $K_2AlF_5$, $K_2AlF_5 \cdot H_2O$, $K_3AlF_6$, $AlF_3$, $KZnF_3$ and $K_2SiF_6$, and cesium fluxes such as $Cs_3AlF_6$, $CsAlF_4 \cdot 2H_2O$ and $Cs_2AlF_5 \cdot H_2O$.

The aluminum alloy material having the thermal bonding function in a single layer, according to the present invention, can be satisfactorily bonded through the above-described control of the heat treatment and the heating atmosphere. In the case where the liquid phase ratio is increased particularly during the bonding, however, the shape can be more satisfactorily sustained by controlling the stress generated inside the aluminum alloy material to be comparatively small. When it is preferable to take into consideration the stress inside the aluminum alloy material as mentioned above, very stable bonding can be obtained by satisfying a condition of $P \leq 460 - 12V$ where a maximum value of the stress generated inside the aluminum alloy material is denoted by P (kPa), and the liquid phase ratio is denoted by V (%). A value denoted by the right side (460 - 12V) in the above formula represents critical stress. If stress exceeding the critical stress is applied to the aluminum alloy material, a risk of causing deformation would occur. The stress generated inside the aluminum alloy material is determined from the shape and the load. It can be calculated, for example, by employing a structural calculation program.

Moreover, the surface form of the junction may also affect the bonding performance as with the pressure applied to the junction. More stable bonding can be obtained when both the surfaces of the junction are smoother. In the present invention, more satisfactory bonding can be obtained when the sum of arithmetic mean wavinesses Wa1 and Wa2, which are determined from surface irregularities in respective bonded surfaces of a pair of members to be bonded before the bonding, satisfy $Wa1 + Wa2 \leq 10$ ($\mu$m). The arithmetic mean wavinesses Wa1 and Wa2 are specified in accordance with the JISB0633. They are each determined from a waviness curve that is measured by setting a cutoff value so as to extract irregularities in wavelengths of 25 to 2500 $\mu$m, and by measuring the irregularities with a laser microscope or a confocal microscope.

4. Regarding Grain Sizes in Metallographic Structure of Aluminum Alloy Material after Thermal Bonding

In the aluminum alloy material having the thermal bonding function in a single layer according to the present invention, the grain sizes after the thermal bonding by the MONOBRAZE process are preferably not less than 100 μm. During the heating, a grain boundary portion is molten. Therefore, if the grain sizes are small, shearing between crystal grains would be more likely to occur at the grain boundary, thus causing deformation. Because it is very difficult to observe the grain sizes during the heating, judgment is made on the basis of the grain sizes after the heating. If the grain sizes after the heating are less than 100 μm, the material would be more likely to deform during the bonding. While an upper limit value of the grain sizes is not limited to particular one, it depends on the manufacturing conditions for the aluminum alloy material and the bonding conditions in the MONOBRAZE process. In the present invention, the upper limit value of the grain sizes is 1500 μm. It is to be noted that the grain sizes are measured in accordance with the grain measurement method specified in ASTM E112-96, and are calculated as mean grain sizes. Examples

The present invention will be described in detail below in connection with Examples and Comparative Examples.

First Embodiment: First, test materials having compositions of A1 to A67 in Tables 1 to 3 were used. In those Tables, "-" in columns of alloy composition ratios indicates that an amount of the relevant element is not more than a detection limit, and "balance" involves inevitable impurities. Using each of the above-mentioned test materials, a cast slab was manufactured by the twin-roll continuous casting and rolling method (CC). In a casting process by the twin-roll continuous casting and rolling method, the temperature of the molten metal was set to 650 to 800 °C, and the casting speed was various changed as indicated in Tables 4 to 6. Although it is difficult to directly measure the cooling rate, the cooling rate is thought as being held within a range of 300 to 700 °C/sec through control of the thickness of the aluminum coating and control of the molten metal sump with the rolling load as discussed above. A cast slab having a width of 130 mm, a length of 20000 mm, and a thickness of 7 mm was obtained with the above-described casting process. Then, the obtained slab in the form of a plate was cold-rolled to a thickness of 0.7 mm. After carrying out intermediate annealing of 420 °C × 2 hours, the slab was cold-rolled to a thickness of 0.071 mm. A test sample was then obtained by carrying out annealing of 350 °C × 3 hours twice, and further rolling the slab plate to a thickness of 0.050 mm at a final cold-rolling reduction rate of 30 %. The arithmetic mean waviness Wa of the test sample was about 0.5 μm.

[Table 1]

| | Composi-tion No. | Alloy Composition Ratios (mass%) | | | | | | | | | | | | | | | | | | |
|---|---|---|---|---|---|---|---|---|---|---|---|---|---|---|---|---|---|---|---|---|
| | | Si | Fe | Cu | Mn | Mg | Zn | In | Sn | Ni | Ti | V | Zr | Cr | Be | Sr | Bi | Na | Ca | Al |
| (a) | A1 | 1.5 | 0.25 | - | 1.0 | - | - | - | - | - | - | - | - | - | - | - | - | - | - | balance |
| | A2 | 2.0 | 0.25 | - | 1.0 | - | - | - | - | - | - | - | - | - | - | - | - | - | - | balance |
| | A3 | 3.0 | 0.25 | - | 1.0 | - | - | - | - | - | - | - | - | - | - | - | - | - | - | balance |
| | A4 | 3.5 | 0.25 | - | 1.0 | - | - | - | - | - | - | - | - | - | - | - | - | - | - | balance |
| | A5 | 4.8 | 0.25 | - | 1.0 | - | - | - | - | - | - | - | - | - | - | - | - | - | - | balance |
| | A6 | 2.5 | 0.10 | - | 1.0 | - | - | - | - | - | - | - | - | - | - | - | - | - | - | balance |
| | A7 | 2.5 | 0.20 | - | 1.0 | - | - | - | - | - | - | - | - | - | - | - | - | - | - | balance |
| | A8 | 2.5 | 1.00 | - | 1.0 | - | - | - | - | - | - | - | - | - | - | - | - | - | - | balance |
| | A9 | 2.5 | 2.00 | - | 1.0 | - | - | - | - | - | - | - | - | - | - | - | - | - | - | balance |
| | A10 | 2.5 | 0.50 | - | 0.12 | - | - | - | - | - | - | - | - | - | - | - | - | - | - | balance |
| | A11 | 2.5 | 0.25 | - | 1.90 | - | - | - | - | - | - | - | - | - | - | - | - | - | - | balance |
| | A12 | 2.5 | 0.25 | 0.1 | 1.0 | - | - | - | - | - | - | - | - | - | - | - | - | - | - | balance |
| | A13 | 2.5 | 0.25 | 1.5 | 1.0 | - | - | - | - | - | - | - | - | - | - | - | - | - | - | balance |
| | A14 | 2.5 | 0.25 | - | 1.0 | 0.1 | - | - | - | - | - | - | - | - | - | - | - | - | - | balance |
| | A15 | 1.0 | 0.50 | - | 1.2 | 2.0 | - | - | - | - | - | - | - | - | - | - | - | - | - | balance |
| | A16 | 2.5 | 0.25 | - | 1.0 | - | 0.08 | - | - | - | - | - | - | - | - | - | - | - | - | balance |
| | A17 | 2.5 | 0.25 | - | 1.0 | - | 0.12 | - | - | - | - | - | - | - | - | - | - | - | - | balance |
| | A18 | 2.5 | 0.25 | - | 1.0 | - | 0.5 | - | - | - | - | - | - | - | - | - | - | - | - | balance |
| | A19 | 2.5 | 0.25 | - | 1.0 | - | 1.2 | - | - | - | - | - | - | - | - | - | - | - | - | balance |
| | A20 | 2.5 | 0.25 | - | 1.0 | - | 2.0 | - | - | - | - | - | - | - | - | - | - | - | - | balance |
| | A21 | 2.5 | 0.25 | - | 1.0 | - | 5.5 | - | - | - | - | - | - | - | - | - | - | - | - | balance |
| | A22 | 2.5 | 0.25 | 1.0 | 1.0 | - | 2.0 | - | - | - | - | - | - | - | - | - | - | - | - | balance |
| | A23 | 2.5 | 0.25 | - | 1.0 | - | 2.0 | - | - | - | 0.1 | - | - | - | - | - | - | - | - | balance |
| | A24 | 2.5 | 0.25 | - | 1.0 | - | 2.0 | - | - | - | - | 0.1 | - | - | - | - | - | - | - | balance |

(a) Within Composition Ratios of Examples

EP 2 998 412 B1

[Table 2]

EP 2 998 412 B1

| | Composi-tion No. | Alloy Composition Ratios(mass%) | | | | | | | | | | | | | | | | | | |
|---|---|---|---|---|---|---|---|---|---|---|---|---|---|---|---|---|---|---|---|---|
| | | Si | Fe | Cu | Mn | Mg | Zn | In | Sn | Ni | Ti | V | Zr | Cr | Be | Sr | Bi | Na | Ca | Al |
| (a) | A25 | 2.5 | 0.25 | - | 1.0 | - | - | 0.05 | - | - | - | - | - | - | - | - | - | - | - | balance |
| | A26 | 2.5 | 0.25 | - | 1.0 | - | - | 0.3 | - | - | - | - | - | - | - | - | - | - | - | balance |
| | A27 | 2.5 | 0.25 | - | 1.0 | - | - | - | 0.05 | - | - | - | - | - | - | - | - | - | - | balance |
| | A28 | 2.5 | 0.25 | - | 1.0 | - | - | - | 0.3 | - | - | - | - | - | - | - | - | - | - | balance |
| | A29 | 2.5 | 0.25 | - | 1.0 | - | - | - | - | 0.05 | - | - | - | - | - | - | - | - | - | balance |
| | A30 | 2.5 | 0.25 | - | 1.0 | - | - | - | - | 0.1 | - | - | - | - | - | - | - | - | - | balance |
| | A31 | 2.5 | 0.25 | - | 1.0 | - | - | - | - | 2.0 | - | - | - | - | - | - | - | - | - | balance |
| | A32 | 2.5 | 0.25 | - | 1.0 | - | - | - | - | - | 0.05 | - | - | - | - | - | - | - | - | balance |
| | A33 | 2.5 | 0.25 | - | 1.0 | - | - | - | - | - | 0.3 | - | - | - | - | - | - | - | - | balance |
| | A34 | 2.5 | 0.25 | - | 1.0 | - | - | - | - | - | - | 0.05 | - | - | - | - | - | - | - | balance |
| | A35 | 2.5 | 0.25 | - | 1.0 | - | - | - | - | - | - | 0.3 | - | - | - | - | - | - | - | balance |
| | A36 | 2.5 | 0.25 | - | 1.0 | - | - | - | - | - | - | - | 0.05 | - | - | - | - | - | - | balance |
| | A37 | 2.5 | 0.25 | - | 1.0 | - | - | - | - | - | - | - | 0.30 | - | - | - | - | - | - | balance |
| | A38 | 2.5 | 0.25 | - | 1.0 | - | - | - | - | - | - | - | - | 0.05 | - | - | - | - | - | balance |
| | A39 | 2.5 | 0.25 | - | 1.0 | - | - | - | - | - | - | - | - | 0.3 | - | - | - | - | - | balance |
| | A40 | 2.5 | 0.25 | - | 1.0 | - | - | - | - | - | - | - | - | - | 0.001 | - | - | - | - | balance |
| | A41 | 2.5 | 0.25 | - | 1.0 | - | - | - | - | - | - | - | - | - | 0.1 | - | - | - | - | balance |
| | A42 | 2.5 | 0.25 | - | 1.0 | - | - | - | - | - | - | - | - | - | - | 0.001 | - | - | - | balance |
| | A43 | 2.5 | 0.25 | - | 1.0 | - | - | - | - | - | - | - | - | - | - | 0.1 | - | - | - | balance |
| | A44 | 2.5 | 0.25 | - | 1.0 | - | - | - | - | - | - | - | - | - | - | - | 0.001 | - | - | balance |
| | A45 | 2.5 | 0.25 | - | 1.0 | - | - | - | - | - | - | - | - | - | - | - | 0.1 | - | - | balance |
| | A46 | 2.5 | 0.25 | - | 1.0 | - | - | - | - | - | - | - | - | - | - | - | - | 0.001 | - | balance |
| | A47 | 2.5 | 0.25 | - | 1.0 | - | - | - | - | - | - | - | - | - | - | - | - | 0.1 | - | balance |
| | A48 | 2.5 | 0.25 | - | 1.0 | - | - | - | - | - | - | - | - | - | - | - | - | - | 0.001 | balance |
| | A49 | 2.5 | 0.25 | - | 1.0 | - | - | - | - | - | - | - | - | - | - | - | - | - | 0.05 | balance |
| | A50 | 2.5 | 0.25 | - | - | - | - | - | - | - | - | - | - | - | - | - | - | - | - | balance |
| | A51 | 3.4 | 0.50 | - | - | - | - | - | - | - | - | - | - | - | - | - | - | - | - | balance |

(a) Within Composition Ratios of Examples

[Table 3]

| | Composition No. | Alloy Composition Ratios(mass%) | | | | | | | | | | | | | | | | | | |
|---|---|---|---|---|---|---|---|---|---|---|---|---|---|---|---|---|---|---|---|---|
| | | Si | Fe | Cu | Mn | Mg | Zn | In | Sn | Ni | Ti | V | Zr | Cr | Be | Sr | Bi | Na | Ca | Al |
| (a) | A52 | 0.9 | 0.25 | - | 0.5 | - | - | - | - | - | - | - | - | - | - | - | - | - | - | balance |
| | A53 | 5.3 | 0.25 | - | 0.5 | - | - | - | - | - | - | - | - | - | - | - | - | - | - | balance |
| | A54 | 2.5 | 0.05 | - | 0.08 | - | - | - | - | - | - | - | - | - | - | - | - | - | - | balance |
| | A55 | 2.5 | 2.50 | - | 2.2 | - | - | - | - | - | - | - | - | - | - | - | - | - | - | balance |
| | A56 | 2.5 | 0.005 | - | - | - | - | - | - | - | - | - | - | - | - | - | - | - | - | balance |
| | A57 | 2.5 | 2.00 | - | 2.0 | - | - | - | - | - | - | - | - | - | - | - | - | - | - | balance |
| | A58 | 2.5 | 0.50 | 2.00 | - | - | - | - | - | - | - | - | - | - | - | - | - | - | - | balance |
| | A59 | 2.5 | 0.50 | - | - | 2.50 | - | - | - | - | - | - | - | - | - | - | - | - | - | balance |
| | A60 | 2.5 | 0.50 | - | - | - | - | - | - | 2.20 | - | - | - | - | - | - | - | - | - | balance |
| | A61 | 2.5 | 0.50 | - | - | - | - | - | - | - | 0.50 | - | - | - | - | - | - | - | - | balance |
| | A62 | 2.5 | 0.50 | - | - | - | - | - | - | - | - | 0.50 | - | - | - | - | - | - | - | balance |
| | A63 | 2.5 | 0.50 | - | - | - | - | - | - | - | - | - | 0.50 | - | - | - | - | - | - | balance |
| | A64 | 2.5 | 0.50 | - | - | - | - | - | - | - | - | - | - | 0.50 | - | - | - | - | - | balance |
| | A65 | 2.5 | 0.50 | - | - | - | 6.50 | - | - | - | - | - | - | - | - | - | - | - | - | balance |
| | A66 | 2.5 | 0.50 | - | - | - | - | 0.50 | - | - | - | - | - | - | - | - | - | - | - | balance |
| | A67 | 2.5 | 0.50 | - | - | - | - | - | 0.50 | - | - | - | - | - | - | - | - | - | - | balance |
| (b) | B1 | 0.5 | 0.3 | 0.15 | 1.0 | - | - | - | - | - | - | - | - | - | - | - | - | - | - | balance |

(a) Within Composition Ratios of Examples

(b) Combined Material

[Table 4]

| | Composition No. | (a) | (b) | (c) | (d) | (e) | Heating Conditions for Bonding | | | Tensile Strength (MPa) | | | (k) | Bonding Rate | | Deformation Rate | |
|---|---|---|---|---|---|---|---|---|---|---|---|---|---|---|---|---|---|
| | | | | | | | (f) | (g) | (h) | (i) | (j) | T/T0 | | (%) | | (%) | |
| Ex.1 | A1 | CC | 1.00 | ○ | 0.0.E+00 | 3.0.E+02 | 620 | 10 | 180 | 136 | 126 | 0.926 | 6.3E+02 | 92 | ◎ | 2 | ◎ |
| Ex.2 | A2 | CC | 1.00 | ○ | 0.0.E+00 | 3.1.E+02 | 610 | 13 | 180 | 147 | 127 | 0.868 | 6.3E+02 | 95 | ◎ | 2 | ◎ |
| Ex.3 | A3 | CC | 1.00 | ○ | 0.0.E+00 | 2.7.E+02 | 600 | 20 | 180 | 161 | 124 | 0.772 | 5.8E+02 | 100 | ◎ | 3 | ◎ |
| Ex.4 | A4 | CC | 1.00 | ○ | 0.0.E+00 | 2.7.E+02 | 600 | 27 | 180 | 156 | 117 | 0.745 | 6.0E+02 | 100 | ◎ | 3 | ◎ |
| Ex.5 | A5 | CC | 1.50 | ○ | 0.0.E+00 | 4.2.E+02 | 590 | 35 | 30 | 151 | 106 | 0.706 | 7.5E+02 | 100 | ◎ | 4 | ○ |
| Ex.6 | A6 | CC | 2.00 | ○ | 0.0.E+00 | 4.6.E+02 | 600 | 14 | 180 | 151 | 127 | 0.845 | 7.9E+02 | 99 | ◎ | 2 | ◎ |
| Ex.7 | A7 | CC | 1.00 | ○ | 0.0.E+00 | 2.3.E+02 | 600 | 14 | 180 | 159 | 130 | 0.816 | 5.4E+02 | 96 | ◎ | 2 | ◎ |
| Ex.8 | A8 | CC | 1.00 | ○ | 0.0.E+00 | 9.1.E+02 | 600 | 12 | 180 | 152 | 130 | 0.851 | 1.2E+03 | 95 | ◎ | 2 | ◎ |
| Ex.9 | A9 | CC | 1.00 | ○ | 0.0.E+00 | 2.8.E+03 | 600 | 10 | 180 | 168 | 137 | 0.812 | 1.0E+03 | 93 | ◎ | 1 | ◎ |
| Ex.10 | A10 | CC | 1.00 | ○ | 0.0.E+00 | 5.2.E+01 | 600 | 17 | 180 | 104 | 109 | 1.041 | 2.3E+02 | 98 | ◎ | 3 | ◎ |
| Ex.11 | A11 | CC | 0.60 | ○ | 0.0.E+00 | 8.8.E+02 | 600 | 11 | 180 | 173 | 138 | 0.794 | 1.1E+03 | 92 | ◎ | 2 | ◎ |
| Ex.12 | A12 | CC | 1.00 | ○ | 0.0.E+00 | 3.1.E+02 | 600 | 15 | 180 | 161 | 130 | 0.806 | 6.4E+02 | 97 | ◎ | 2 | ◎ |
| Ex.13 | A13 | CC | 1.00 | ○ | 0.0.E+00 | 2.8.E+02 | 600 | 23 | 180 | 233 | 146 | 0.627 | 6.0E+02 | 100 | ◎ | 3 | ◎ |
| Ex.14 | A14 | CC | 1.00 | ○ | 0.0.E+00 | 3.0.E+02 | 600 | 15 | 180 | 165 | 131 | 0.796 | 6.2E+02 | 97 | ◎ | 2 | ◎ |
| Ex.15 | A15 | CC | 1.00 | ○ | 0.0.E+00 | 6.2.E+02 | 600 | 6 | 3600 | 232 | 162 | 0.701 | 9.4E+02 | 78 | Δ | 2 | ◎ |

E+ in Table means exponential notation. For example, 3.0.E+02 means $3.0 \times 10^2$.

(a) Casting Method (b) Casting Speed (m/min) (c) Manufacturability (d) Surface Density of Si-Based Intermetallic Compounds (pieces/mm$^2$)

(e) Volume Density of Al-Based Intermetallic Compounds (pieces/mm$^3$) (f) Temperature (°C) (g) Equilibrium Liquid Phase Rate (%) (h) Holding Time (sec) (i) Before Heating for Bonding (T0) (j) After Heating for Bonding (T) (k) Grain Size after Heating for Bonding ($\mu$m)

[Table 5]

| | Composition No. | (a) | (b) | (c) | (d) | (e) | Heating Conditions for Bonding | | | Tensile Strength (MPa) | | | (k) | Bonding Rate | | Deformation Rate | |
|---|---|---|---|---|---|---|---|---|---|---|---|---|---|---|---|---|---|
| | | | | | | | (f) | (g) | (h) | (i) | (j) | T/T0 | | (%) | | (%) | |
| Ex.16 | A29 | CC | 1.00 | ○ | 0.0.E+00 | 2.8.E+02 | 600 | 14 | 180 | 154 | 128 | 0.834 | 6.0E+02 | 96 | ◎ | 2 | ◎ |
| Ex.17 | A30 | CC | 1.00 | ○ | 0.0.E+00 | 2.5.E+02 | 600 | 14 | 180 | 161 | 130 | 0.811 | 5.6E+02 | 96 | ◎ | 2 | ◎ |
| Ex.18 | A31 | CC | 1.00 | ○ | 0.0.E+00 | 2.7.E+02 | 600 | 14 | 180 | 169 | 133 | 0.788 | 5.9E+02 | 96 | ◎ | 2 | ◎ |
| Ex.19 | A32 | CC | 1.00 | ○ | 0.0.E+00 | 3.1.E+02 | 600 | 14 | 180 | 161 | 131 | 0.809 | 6.3E+02 | 97 | ◎ | 2 | ◎ |
| Ex.20 | A33 | CC | 1.00 | ○ | 0.0.E+00 | 3.0.E+02 | 600 | 14 | 180 | 158 | 129 | 0.820 | 6.2E+02 | 97 | ◎ | 2 | ◎ |
| Ex.21 | A34 | CC | 1.00 | ○ | 0.0.E+00 | 2.9.E+02 | 600 | 14 | 180 | 145 | 125 | 0.862 | 6.1E+02 | 97 | ◎ | 2 | ◎ |
| Ex.22 | A35 | CC | 1.00 | ○ | 0.0.E+00 | 2.6.E+02 | 600 | 14 | 180 | 147 | 126 | 0.857 | 5.7E+02 | 96 | ◎ | 2 | ◎ |
| Ex.23 | A36 | CC | 1.00 | ○ | 0.0.E+00 | 2.6.E+02 | 600 | 14 | 180 | 157 | 129 | 0.823 | 5.7E+02 | 96 | ◎ | 2 | ◎ |
| Ex.24 | A37 | CC | 1.00 | ○ | 0.0.E+00 | 3.0.E+02 | 600 | 14 | 180 | 161 | 131 | 0.809 | 6.2E+02 | 97 | ◎ | 2 | ◎ |
| Ex.25 | A38 | CC | 1.00 | ○ | 0.0.E+00 | 2.9.E+02 | 600 | 14 | 180 | 160 | 130 | 0.812 | 6.2E+02 | 97 | ◎ | 2 | ◎ |
| Ex.26 | A39 | CC | 1.00 | ○ | 0.0.E+00 | 2.7.E+02 | 600 | 14 | 180 | 167 | 132 | 0.794 | 5.9E+02 | 96 | ◎ | 2 | ◎ |
| Ex.27 | A40 | CC | 1.00 | ○ | 0.0.E+00 | 2.9.E+02 | 600 | 14 | 180 | 149 | 126 | 0.849 | 6.1E+02 | 97 | ◎ | 2 | ◎ |
| Ex.28 | A41 | CC | 1.00 | ○ | 0.0.E+00 | 3.1.E+02 | 600 | 14 | 180 | 142 | 124 | 0.873 | 6.4E+02 | 97 | ◎ | 2 | ◎ |
| Ex.29 | A42 | CC | 1.00 | ○ | 0.0.E+00 | 2.8.E+02 | 600 | 14 | 180 | 159 | 130 | 0.816 | 6.0E+02 | 96 | ◎ | 2 | ◎ |
| Ex.30 | A43 | CC | 1.00 | ○ | 0.0.E+00 | 2.7.E+02 | 600 | 14 | 180 | 149 | 126 | 0.848 | 5.9E+02 | 96 | ◎ | 2 | ◎ |
| Ex.31 | A44 | CC | 1.00 | ○ | 0.0.E+00 | 2.8.E+02 | 600 | 14 | 180 | 153 | 128 | 0.835 | 6.1E+02 | 97 | ◎ | 2 | ◎ |
| Ex.32 | A45 | CC | 1.00 | ○ | 0.0.E+00 | 2.7.E+02 | 600 | 14 | 180 | 144 | 125 | 0.866 | 5.9E+02 | 96 | ◎ | 2 | ◎ |
| Ex.33 | A46 | CC | 1.00 | ○ | 0.0.E+00 | 2.7.E+02 | 600 | 14 | 180 | 149 | 127 | 0.847 | 5.9E+02 | 96 | ◎ | 2 | ◎ |
| Ex.34 | A47 | CC | 1.00 | ○ | 0.0.E+00 | 2.7.E+02 | 600 | 14 | 180 | 147 | 126 | 0.854 | 5.8E+02 | 96 | ◎ | 2 | ◎ |
| Ex.35 | A48 | CC | 1.00 | ○ | 0.0.E+00 | 3.1.E+02 | 600 | 14 | 180 | 146 | 126 | 0.858 | 6.3E+02 | 97 | ◎ | 2 | ◎ |
| Ex.36 | A49 | CC | 1.00 | ○ | 0.0.E+00 | 2.6.E+02 | 600 | 14 | 180 | 157 | 129 | 0.822 | 5.8E+02 | 96 | ◎ | 2 | ◎ |
| Ex.37 | A50 | CC | 1.20 | ○ | 0.0.E+00 | 3.7.E+01 | 600 | 18 | 180 | 112 | 110 | 0.985 | 1.9E+02 | 100 | ◎ | 4 | ○ |
| Ex.38 | A51 | CC | 1.00 | ○ | 0.0.E+00 | 3.5.E+01 | 600 | 28 | 180 | 148 | 112 | 0.756 | 1.9E+02 | 100 | ◎ | 5 | ○ |
| Ex.39 | A44 | DC | 0.03 | ○ | 2.4.E+01 | 3.1.E+01 | 600 | 14 | 180 | 144 | 125 | 0.867 | 1.4E+02 | 82 | ○ | 7 | △ |

| | Composition No. | (a) | (b) | (c) | (d) | (e) | Heating Conditions for Bonding | | | Tensile Strength (MPa) | | | (k) | Bonding Rate | | Deformation Rate | |
|---|---|---|---|---|---|---|---|---|---|---|---|---|---|---|---|---|---|
| | | | | | | | (f) | (g) | (h) | (i) | (j) | T/T0 | | (%) | | (%) | |
| Ex.40 | A48 | DC | 0.03 | ○ | 6.5.E+01 | 5.5.E+01 | 600 | 14 | 180 | 155 | 129 | 0.827 | 1.5E+02 | 82 | ○ | 7 | Δ |

E+ in Table means exponential notation. For example, 2.8.E+02 means $2.8 \times 10^2$.
(a) Casting Method (b) Casting Speed (m/min) (c) Manufacturability (d) Surface Density of Si-Based Intermetallic Compounds (pieces/mm$^2$)
(e) Volume Density of Al-Based Intermetallic Compounds (pieces/$\mu$m$^3$) (f) Temperature (°C) (g) Equilibrium Liquid Phase Rate (%)
(h) Holding Time (sec) (i) Before Heating for Bonding (T0) (j) After Heating for Bonding (T) (k) Grain Size after Heating for Bonding ($\mu$m)

[Table 6]

| | Composition No. | (a) | (b) | (c) | (d) | (e) | Heating Conditions for Bonding | | | Tensile Strength (MPa) | | | (k) | Bonding Rate | | Deformation Rate | |
| --- | --- | --- | --- | --- | --- | --- | --- | --- | --- | --- | --- | --- | --- | --- | --- | --- | --- |
| | | | | | | | (f) | (g) | (h) | (i) | (j) | T/TO | | (%) | | (%) | |
| CE1 | A52 | CC | 1.00 | ○ | 0.0.E+00 | 8.5.E+01 | 620 | 2 | 180 | 120 | 130 | 1.076 | 3.1E+02 | 19 | × | 1 | ◎ |
| CE2 | A53 | CC | 1.50 | ○ | 1.8.E+02 | 2.3.E+02 | 580 | 36 | 180 | 155 | 121 | 0.781 | 1.9E+02 | 100 | ◎ | 16 | × |
| CE3 | A54 | DC | 0.03 | ○ | 1.2.E+02 | 0.0.E+00 | 600 | 17 | 180 | 81 | 80 | 0.988 | 2.0E+01 | 84 | ◎ | 18 | × |
| CE4 | A55 | CC | 1.00 | × | - | - | - | - | - | - | - | - | - | - | - | - | - |
| CE5 | A56 | CC | 1.00 | ○ | 0.0.E+00 | 0.0.E+00 | 600 | 17 | 180 | 140 | 121 | 0.866 | 2.5E+01 | 98 | ◎ | 15 | × |
| CE6 | A57 | CC | 1.00 | ○ | 0.0.E+00 | 1.1.E+04 | 600 | 6 | 180 | 186 | 147 | 0.789 | 1.1E+02 | 84 | ◎ | 13 | × |
| CE7 | A50 | DC | 0.03 | ○ | 9.8.E+01 | 0.0.E+00 | 600 | 18 | 180 | 83 | 80 | 0.958 | 3.0E+01 | 85 | ◎ | 17 | × |
| CE8 | A51 | DC | 0.03 | ○ | 5.7.E+02 | 0.0.E+00 | 600 | 28 | 180 | 108 | 99 | 0.914 | 6.0E+01 | 91 | ◎ | 17 | × |
| CE9 | A59 | CC | 1.00 | ○ | 0.0.E+00 | 2.9.E+01 | 600 | 31 | 180 | 235 | 185 | 0.787 | 1.7E+02 | 5 | × | 5 | ○ |
| CE10 | A60 | CC | 1.00 | × | - | | - | - | - | - | - | - | - | - | - | - | - |
| CE11 | A61 | CC | 1.00 | × | - | | - | - | - | - | - | - | - | - | - | - | - |
| CE12 | A62 | CC | 1.00 | × | - | | - | - | - | - | - | - | - | - | - | - | - |
| CE13 | A63 | CC | 1.00 | × | - | | - | - | - | - | - | - | - | - | - | - | - |
| CE14 | A64 | CC | 1.00 | × | - | | - | - | - | - | - | - | - | - | - | - | - |

E+ in Table means exponential notation. For example, 8.5.E+01 means 8.5×10¹.

CE: Comparative Example (a) Casting Method (b) Casting Speed (m/min) (c) Manufacturability (d) Surface Density of Si-Based Intermetallic Compounds (pieces/mm²)
(e) Volume Density of Al-Based Intermetallic Compounds (pieces/μm³) (f) Temperature (°C) (g) Equilibrium Liquid Phase Rate (%)
(h) Holding Time (sec) (i) Before Heating for Bonding (TO) (j) After Heating for Bonding (T) (k) Grain Size after Heating for Bonding (μm)

During the casting, a grain crystal miniaturization agent was loaded at the molten metal temperature of 680 °C to 750 °C. At that time, the grain crystal miniaturization agent was continuously loaded at a constant rate into the molten metal flowing through a trough, which couples a molten-metal holding furnace and the head box positioned just upstream of the molten-metal supply nozzle, by employing a wire-like rod of the grain crystal miniaturization agent. The grain crystal miniaturization agent used here was made of an Al-5Ti-1B alloy, and an amount of the grain crystal miniaturization agent added was adjusted to 0.002 % in terms of an amount of B.

The test materials having the compositions A44, 48, 50, 51 and 54 in Tables 2 and 3 were cast into the size of 100 mm × 300 mm by the semi-continuous casting method (DC). The casting speed was set to 30 mm/min, and the cooling rate was set to 1 °C/sec. After facing the slab cast by the semi-continuous casting method, the slab was heated to 500 °C and was hot-rolled to a thickness of 3 mm. Then, the hot-rolled plate was cold-rolled to a thickness of 0.070 mm, and was subjected to intermediate annealing of 380 °C × 2 hours. Each test material was obtained by further rolling the plate to a thickness of 0.050 mm at a final cold-rolling reduction rate of 30 %.

Those test materials were evaluated on manufacturability in the manufacturing process. The manufacturability was evaluated to be ○ (YES) in the case that, when a plate material or a slab was manufactured, no problems occurred in the manufacturing process and the sound plate material or slap was obtained. It was evaluated to be X (NO) in the case that cracking occurred during the casting, or that the rolling was difficult to carry out due to generation of giant intermetallic compounds during the casing, thus causing a problem with the manufacturability.

The volume density of the Al-based intermetallic compounds in the manufactured plate (bare plate) was measured by observing a section along the thickness direction of the plate with a TEM. A sample for the TEM observation was prepared with the aid of electrolytic etching. In the TEM observation, a film thickness was determined by the EELS measurement. A visual field where a film thickness was 50 to 200 $\mu$m in average was selected and observed. The Si-based intermetallic compounds and the Al-based intermetallic compounds can be discriminated through mapping with STEM-EDS. The observation was carried out at a magnification of 100000 for ten visual fields for each sample. The number of the Al-based intermetallic compounds having the equivalent circle diameters of 0.01 $\mu$m to 0.5 $\mu$m was measured through image analysis of each TEM photograph. The volume density was calculated by multiplying the measured area of the image by an average film thickness, thus determining a measurement volume.

The surface density of the Si-based intermetallic compounds in the manufactured plate (bare plate) was measured by observing a section along the thickness direction of the plate with an SEM. The Si-based intermetallic compounds and the Al-based intermetallic compounds (Al-Fe-Mn-Si-based intermetallic compounds) were discriminated from each other by observing an SEM - reflected electron image and by further observing an SEM - secondary electron image. In the observation of the SEM - reflected electron image, matters appearing in strong white contrast represent the Al-based intermetallic compounds, and matters appearing in weak white contrast represent the Si-based intermetallic compounds. Because the Si-based intermetallic compounds appear in weak contrast, fine grains, etc. are difficult to discern in some cases. In such a case, an SEM - secondary electron image of the sample was observed by, after polishing the sample surface, further etching the sample for about 10 sec with a colloidal silica-based polishing suspension. Grains appearing in strong black contrast represent the Si-based intermetallic compounds. The observation was carried out for five visual fields for each sample. The surface density of the Si-based intermetallic compounds having the equivalent circle diameters of 5.0 $\mu$m to 10 $\mu$m in the sample was measured through image analysis of a TEM photograph in each visual field.

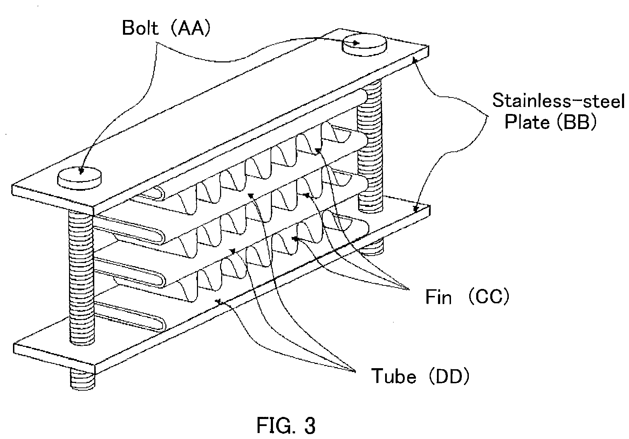

Next, each test material was formed into a fin material having a width of 16 mm, a mountain height of 7 mm, and a pitch of 2.5 mm as illustrated in Fig. 3. A test piece (mini-core) stacked in three stages, illustrated in Fig. 3, was fabricated by combining the fin material CC with a tube material DD having a thickness of 0.4 mm, which was prepared through electric welding of a combined material having the composition B1 in Table 3, and by assembling them into a jig BB made of stainless steel with bolts AA.

After dipping the mini-core in a suspension containing 10 % of non-corrosive fluoride-based flux and drying it, the fin materials and the tube materials were bonded to each other by heating the mini-core under the heating conditions for the bonding, indicated in Tables 4 to 6, in a nitrogen atmosphere. In Example 16, however, the fin materials and the tube materials were heated in vacuum and bonded to each other without coating the flux. The holding time at each temperature in a bonding step was set to 30 to 3600 sec. In the case using the above-mentioned mini-core, a compressive load of about 4 N was generated between the stainless-steel jig and the mini-core during the heating for the bonding due to the difference in thermal expansion coefficient between the stainless-steel jig and the aluminum material. Calculation on the basis of a bonding area means that stress of about 10 kPa is generated at the bonded surface between the fin and the tube.

After bonding the fin materials and the tube materials, the fins were peeled from the tubes, and 40 junctions between the fins and the tubes in the mini-core were examined to measure a proportion of completely bonded junctios (i.e., a bonding rate). The examination result was evaluated to be ◎ (excellent) when the bonding rate was 90 % or more, ○ (good) when it was 80 % or more and less than 90 %, △ (fair) when it was 70 % or more and less than 80 %, and × (poor) when it was less than 70 %.

Furthermore, a rate of deformation caused by buckling of the fins was evaluated by measuring the heights of the fins in the mini-core between before and after the bonding. More specifically, the measurement result was evaluated to be ◎ (excellent) when a rate of change (reduction) of the fin height after the bonding relative to the fin height before the bonding was 3 % or less, ○ (good) when it was more than 3 % and 5 % or less, △ (fair) when it was more than 5 % and 8 % or less, and × (poor) when it was more than 8 %.

In this embodiment, a tension test was conducted on the material before and after the bonding by the MONOBRAZE process. The tension test was carried out on each sample in accordance with JIS Z2241 at room temperature of 20 to 30 °C on conditions of the tension speed of 10 mm/min and the gauge length of 50 mm. The tension test after the bonding by the MONOBRAZE process was carried out by heating the sample under the heating conditions for the bonding by the MONOBRAZE process, which are the as those set in fabricating the mini-core, cooling the heated sample to the above-mentioned room temperature, and then evaluating the test result within 24 hours.

In this embodiment, the grain size in the metallographic structure of the material after the bonding the MONOBRAZE process was also measured. The measurement was conducted in accordance with the method stipulated in ASTM E112-96. After heating a single plate of the sample of the present invention under the same heating conditions for the bonding as those set in fabricating the mini-core, the grain structure was processed to become more easily observable by polishing an L-LT section, and then performing surface treatment with anodic oxidation. The grain structure of the sample of the present invention was observed with an optical microscope, and the reference image of the grain structure specified in ASTM was compared with a section image of the sample of the present invention. The grain size of the reference image having the grain structure most analogous to that in the section image of the sample of the present invention was adopted.

For each of the above-described test materials, Tables 4 to 6 list the casting method, the casting speed, the evaluation result of manufacturability, the volume density of the Al-based intermetallic compounds, the surface density of the Si-based intermetallic compounds, the heating conditions for the bonding, the evaluation results of the tension test before and after the bonding, the grain size after the bonding, the bonding rate, and the deformation rate. The equilibrium liquid phase rate in the heating conditions for the bonding represents a value calculated using the equilibrium state diagram calculation software.

As seen from Tables 4 and 5, good manufacturability was obtained for the test materials in each of which the composition of the aluminum alloy material satisfied the conditions specified in the present invention. On the other hand, as seen from Table 6, for the alloy compositions A55 and A60 to A64, because they did not fall within the specified ranges of the alloy composition ratios, giant intermetallic compounds were generated during the casting, and the rolling could not be performed until reaching the final plate thickness.

Regarding the results of the bonding tests, the evaluation results of the individual samples of the mini-cores are reviewed below in comparison with the compositions (Tables 1 to 3) of the aluminum alloy materials used as the fin materials. The test materials (Examples 1 to 40) satisfying the conditions specified in the present invention related to the composition of the aluminum alloy material were acceptable on all of the bonding rate, the fin buckling, and the tensile strength. In Examples 12 to 26, i.e., in the test materials made of alloys further optionally containing Mg, Cu, Mn, Ni, Ti, V, Zr and Cr as additional elements, it was confirmed that more satisfactory results were obtained on the evaluation of the deformation rate, and that those additional elements had the effect of increasing the strength.

On the other hand, in Comparative Example 1, because the Si component did not reach the specified amount, the generation rate of the liquid phase was low even by setting the heating temperature for the bonding to a comparatively high level. Accordingly, the bonding rate was reduced, and the bonding performance was unacceptable.

In Comparative Example 2, because the Si component exceeded the specified amount, the generation rate of the liquid phase was too high even by setting the heating temperature for the bonding to a comparatively low level. Accordingly, the fin buckling occurred, and the deformation rate was unacceptable.

In Comparative Example 3, while the Si, Fe and Mn components were all within the specified amount ranges, the volume density of the Al-based intermetallic compounds was below the specified range, and the grain sizes after the heating were reduced. Moreover, because the number of nuclei for the generation of the liquid phase was small, the generation of the liquid phase at the grain boundary was promoted. Accordingly, the fin buckling occurred, and the deformation rate was unacceptable.

In Comparative Example 4, because both the Fe and Mn components exceeded the specified amounts, a problem occurred with the manufacturability, and the evaluation could not be performed.

In Comparative Example 5, because the Fe component did not reach the specified amount, the volume density of the Al-based intermetallic compounds was less than the specified value, and the grain sizes after the heating were reduced. Moreover, because the number of nuclei for the generation of the liquid phase was small, the generation of the liquid phase at the grain boundary was promoted. Accordingly, the fin buckling occurred, and the deformation rate was unacceptable.

In Comparative Example 6, while the Si, Fe and Mn components were all within the specified amount ranges, the volume density of the Al-based intermetallic compounds exceeded the specified range. Moreover, the number of nuclei for the generation of the liquid phase was too large, and an amount of the liquid phase contacting the grain boundary was increased. Accordingly, the fin buckling occurred, and the deformation rate was unacceptable.

In Comparative Example 7, while the Si and Fe components were all within the specified amount ranges, the volume density of the Al-based intermetallic compounds was less than the specified value, and the grain sizes after the heating were reduced. Moreover, because the number of nuclei for the generation of the liquid phase was small, the generation of the liquid phase at the grain boundary was promoted. Accordingly, the fin buckling occurred, and the deformation rate was unacceptable.

In Comparative Example 8, while the Si and Fe components were all within the specified amount ranges, the surface density of the Si-based intermetallic compounds exceeded the specified value, the volume density of the Al-based intermetallic compounds was below the specified range, and the grain sizes after the heating were reduced. Moreover, because the number of nuclei for the generation of the liquid phase was small, the generation of the liquid phase at the grain boundary was promoted. Accordingly, the fin buckling occurred, and the deformation rate was unacceptable.

In Comparative Example 9, because the content of Mg exceeded the specified range, the flux did not effectively develop the action during the heating for the bonding, and the bonding performance degraded. Accordingly, the evaluation result of the bonding rate was unacceptable.

In Comparative Example 10, because the content of Ni exceeded the specified range, a problem occurred with the manufacturability, and the evaluation could not be performed.

In Comparative Example 11, because the content of Ti exceeded the specified range, a problem occurred with the manufacturability, and the evaluation could not be performed.

In Comparative Example 12, because the content of V exceeded the specified range, a problem occurred with the manufacturability, and the evaluation could not be performed.

In Comparative Example 13, because the content of Zr exceeded the specified range, a problem occurred with the manufacturability, and the evaluation could not be performed.

In Comparative Example 14, because the content of Cr exceeded the specified range, a problem occurred with the manufacturability, and the evaluation could not be performed.

Second Embodiment: Influences of the additional elements upon corrosion resistance were studied here. Some of the materials manufactured in the first embodiment were selected as listed in Table 7, and they were each formed into a fin similar to that in the first embodiment. A test piece (mini-core) in three stages was then fabricated in a similar manner to that in the first embodiment (Fig. 3). After dipping the mini-core in a suspension containing 10 % of noncorrosive fluoride-based flux and drying it, the fins and the tubes were bonded to each other by heating the mini-core up to corresponding one of various heating temperatures for the bonding, indicated in Table 7, in a nitrogen atmosphere, and by holding the heated state for a holding time of 3 min.

[Table 7]

| | Composition No. | (a) | (b) | Heating Conditions for bonding | | | (f) | Bonding Rate | | Deformation Rate | | Corrosion Resistance |
|---|---|---|---|---|---|---|---|---|---|---|---|---|
| | | | | (c) | (d) | (e) | | (%) | | (%) | | |
| Ex.41 | A2 | 0.0.E+00 | 4.2.E+02 | 610 | 13 | 180 | 627 | 91 | ◎ | 2 | ◎ | △ |
| Ex.42 | A16 | 0.0.E+00 | 4.3.E+02 | 600 | 15 | 180 | 634 | 91 | ◎ | 2 | ◎ | ○ |
| Ex.43 | A17 | 0.0.E+00 | 3.8.E+02 | 600 | 6 | 180 | 584 | 73 | △ | 2 | ◎ | ○ |
| Ex.44 | A18 | 0.0.E+00 | 3.9.E+02 | 600 | 14 | 180 | 596 | 92 | ◎ | 2 | ◎ | ○ |
| Ex.45 | A19 | 0.0.E+00 | 5.1.E+02 | 600 | 14 | 180 | 752 | 92 | ◎ | 2 | ◎ | ◎ |
| Ex.46 | A20 | 0.0.E+00 | 3.6.E+02 | 600 | 15 | 180 | 567 | 92 | ◎ | 2 | ◎ | ◎ |
| Ex.47 | A21 | 0.0.E+00 | 3.7.E+02 | 600 | 16 | 180 | 571 | 92 | ◎ | 2 | ◎ | ○ |
| Ex.48 | A22 | 0.0.E+00 | 4.2.E+02 | 600 | 24 | 180 | 627 | 100 | ◎ | 3 | ◎ | ○ |
| Ex.49 | A23 | 0.0.E+00 | 4.0.E+02 | 600 | 26 | 180 | 606 | 100 | ◎ | 3 | ◎ | ◎ |
| Ex.50 | A24 | 0.0.E+00 | 3.7.E+02 | 600 | 24 | 180 | 575 | 98 | ◎ | 3 | ◎ | ◎ |
| Ex.51 | A25 | 0.0.E+00 | 3.9.E+02 | 600 | 24 | 180 | 597 | 100 | ◎ | 3 | ◎ | ○ |
| Ex.52 | A26 | 0.0.E+00 | 4.3.E+02 | 600 | 24 | 180 | 639 | 96 | ◎ | 3 | ◎ | ○ |
| Ex.53 | A27 | 0.0.E+00 | 4.0.E+02 | 600 | 14 | 180 | 601 | 93 | ◎ | 2 | ◎ | ○ |
| Ex.54 | A28 | 0.0.E+00 | 4.2.E+02 | 600 | 14 | 180 | 622 | 92 | ◎ | 2 | ◎ | ○ |
| Com.Ex.15 | A58 | 0.0.E+00 | 2.6.E+01 | 600 | 29 | 180 | 159 | 100 | ◎ | 5 | ○ | × |
| Com.Ex.16 | A65 | 0.0.E+00 | 3.4.E+01 | 600 | 32 | 180 | 184 | 100 | ◎ | 6 | △ | × |
| Com.Ex.17 | A66 | 0.0.E+00 | 2.7.E+01 | 600 | 19 | 180 | 161 | 99 | ◎ | 4 | ○ | × |
| Com.Ex.18 | A67 | 0.0.E+00 | 3.2.E+01 | 600 | 19 | 180 | 179 | 99 | ◎ | 4 | ○ | × |

E+ in Table means exponential notation. For example, 4.2.E+02 means $4.2 \times 10^2$.

Com.Ex.: Comparative Example (a) Surface Density of Si-Based Intermetallic Compounds (pieces/mm$^2$) (b) Volume Density of Al-Based Intermetallic Compounds (pieces/$\mu$m$^3$)

(c) Temperature (°C) (d) Equilibrium Liquid Phase Rate (%) (e) Holding Time (sec) (f) Grain Size after Heating for Bonding ($\mu$m)

The bonding rate and the deformation rate were evaluated in a similar manner to that in the first embodiment. Furthermore, the volume density of the Al-based intermetallic compounds, the surface density of the Si-based intermetallic compounds, and the grain sizes after the heating for the bonding were measured in similar manners to those in the first embodiment. The obtained evaluation results and measurement results are also listed Table 7.

Moreover, to evaluate corrosion resistance of the fin itself, the CASS test was carried out for 500 hours for confirmation of a corroded state of the fin. The confirmation result was evaluated to be ⊚ (excellent) when observation of a section with an optical microscope showed that the fin remained at 70 % or more, ○ (good) when it showed that the fin remained at 50 % or more and less than 70 %, △ (fair) when it showed that the fin remained at 30 % or more and less than 50 %, and × (poor) when it showed that the fin remained less than 30 %. The evaluation results of the corrosion resistance are further listed in Table 7.

In Examples 41 to 54 in this embodiment, the test materials were made of aluminum alloys optionally containing Zn, Cu, Mn, In, Sn, Ti and V added as additional elements. As seen from Table 7, the corrosion resistance was improved in those Examples in comparison with the aluminum alloy material not added with Zn, etc. as represented by Example 41. Thus, the usefulness of those additional elements was confirmed.

On the other hand, in Comparative Example 15, because the content of Cu exceeded the specified range, the self-corrosion resistance was reduced, and the evaluation result of the corrosion resistance was unacceptable.

In Comparative Example 16, because the content of Zn exceeded the specified range, the corrosion rate was increased significantly, and the evaluation result of the corrosion resistance was unacceptable.

In Comparative Example 17, because the content of In exceeded the specified range, the corrosion rate was increased significantly, and the evaluation result of the corrosion resistance was unacceptable.

In Comparative Example 18, because the content of Sn exceeded the specified range, the corrosion rate was increased significantly, and the evaluation result of the corrosion resistance was unacceptable.

Third Embodiment: Control of the metallographic structure in the manufacturing process was studied here. The materials having the composition No. A3 were selected from the materials manufactured in the first embodiment, and fin materials each having the final plate thickness of 0.05 mm were manufactured under various conditions of the manufacturing process as listed in Table 8. The surface density of the Si-based intermetallic compounds, the volume density of the Al-based intermetallic compounds, and the amount of solid solution Si were measured for a bare plate made of each of the selected materials. The measured results are listed in Table 9. In this embodiment, the surface density of the Si-based intermetallic compounds having the equivalent circle diameters of less than 0.5 μm and more than 10 μm, and the volume density of the Al-based intermetallic compounds having the equivalent circle diameters of more than 0.5 μm were further measured. These measured results are also listed in Table 9

[Table 8]

| | Composition No. | Manufactuability | Manufacturing Process | | | | Cold rolling (First) | Annealing (First) | | Cold Rolling (Second) | Annealing (Second) | | Cold Rolling (Final) |
|---|---|---|---|---|---|---|---|---|---|---|---|---|---|
| | | | Temperature of Molten Metal (°C) | Casting Speed (mm/sec) | Rolling Load (N/mm) | Thickness of Aluminum Coating ($\mu$m) | Reduction Rate (%) | Temperature (°C) | Time (h) | Reduction Rate (%) | Temperature (°C) | Time (h) | Reduction Rate (%) |
| Ex.55 | A3 | ○ | 710 | 669 | 3041 | 120 | 90 | 330 | 3 | 92 | 330 | 2 | 15 |
| Ex.56 | A3 | ○ | 650 | 596 | 5036 | 80 | 90 | 330 | 3 | 91 | 330 | 2 | 20 |
| Ex.57 | A3 | ○ | 750 | 668 | 3045 | 370 | 90 | 330 | 3 | 90 | 330 | 2 | 25 |
| Ex.58 | A3 | ○ | 710 | 679 | 2946 | 10 | 90 | 330 | 3 | 92 | 330 | 2 | 15 |
| Ex.59 | A3 | ○ | 710 | 685 | 2898 | 460 | 90 | 330 | 3 | 92 | 370 | 2 | 15 |
| Ex.60 | A3 | ○ | 710 | 672 | 3010 | 140 | 90 | 330 | 1 | 92 | 330 | 2 | 15 |
| Ex.61 | A3 | ○ | 710 | 684 | 2907 | 160 | 90 | 330 | 10 | 92 | 330 | 2 | 15 |
| Ex.62 | A3 | ○ | 710 | 668 | 3044 | 170 | 90 | 250 | 1 | 92 | 330 | 2 | 15 |
| Ex.63 | A3 | ○ | 710 | 653 | 3186 | 380 | 90 | 250 | 10 | 92 | 330 | 2 | 15 |
| Ex.64 | A3 | ○ | 710 | 679 | 2950 | 390 | 90 | 450 | 1 | 92 | 370 | 2 | 15 |
| Ex.65 | A3 | ○ | 710 | 689 | 2863 | 410 | 90 | 450 | 10 | 92 | 330 | 2 | 15 |
| Ex.66 | A3 | ○ | 710 | 671 | 3025 | 260 | 90 | 330 | 3 | 92 | 330 | 1 | 15 |
| Ex.67 | A3 | ○ | 710 | 658 | 3140 | 270 | 90 | 330 | 3 | 93 | 330 | 10 | 0 |
| Ex.68 | A3 | ○ | 710 | 655 | 3165 | 280 | 90 | 330 | 3 | 86 | 250 | 1 | 50 |
| CE19 | A3 | ○ | 640 | 1520 | 260 | 250 | 90 | 330 | 3 | 92 | 330 | 2 | 15 |
| CE20 | A3 | × | 780 | 520 | 7820 | 270 | 90 | - | - | - | - | - | - |
| CE21 | A3 | ○ | 710 | 658 | 3138 | 0 | 90 | 330 | 3 | 92 | 330 | 2 | 15 |
| CE22 | A3 | ○ | 710 | 650 | 3210 | 860 | 90 | 330 | 3 | 92 | 330 | 2 | 15 |
| CE23 | A3 | ○ | 710 | 658 | 3138 | 100 | 90 | 230 | 3 | 92 | 330 | 2 | 15 |
| CE24 | A3 | ○ | 710 | 668 | 3048 | 460 | 90 | 560 | 3 | 92 | 330 | 2 | 15 |
| CE25 | A3 | ○ | 710 | 670 | 3030 | 110 | 90 | 330 | 0.5 | 92 | 330 | 2 | 15 |

| | Composition No. | Manufactuability | Manufacturing Process | | | | Cold rolling (First) | Annealing (First) | | Cold Rolling (Second) | Annealing (Second) | | Cold Rolling (Final) |
|---|---|---|---|---|---|---|---|---|---|---|---|---|---|
| | | | Temperature of Molten Metal (°C) | Casting Speed (mm/sec) | Rolling Load (N/mm) | Thickness of Aluminum Coating ($\mu$m) | Reduction Rate (%) | Temperature (°C) | Time (h) | Reduction Rate (%) | Temperature (°C) | Time (h) | Reduction Rate (%) |
| CE26 | A3 | ○ | 710 | 658 | 3138 | 120 | 90 | 330 | 15 | 92 | 330 | 2 | 15 |
| CE: Comparative Example | | | | | | | | | | | | | |

EP 2 998 412 B1

[Table 9]

| | Surface Density of Si-based Intermetallic Compounds | | | Volume Density of Al-based Intermetallic Compounds | | Amount of Solid Solution Si | Grain Size After Heating for Bonding | Bonding Rate | | Deformation Rate | |
|---|---|---|---|---|---|---|---|---|---|---|---|
| | Equivalent Circle Diameter less than 5 $\mu$m | Equivalent Circle Diameter 5-10 $\mu$m | Equivalent Circle Diameter more than 10 $\mu$m | Equivalent Circle Diameter 0.01~0.5 $\mu$m | Equivalent Circle Diameter more than 0.5 $\mu$m | | | | | | |
| | (pieces/mm$^2$) | (pieces/mm$^2$) | (pieces/mm$^2$) | (pieces/$\mu$m$^3$) | (pieces/$\mu$m$^3$) | (mass%) | ($\mu$m) | (%) | | (%) | |
| Ex.55 | 8.4.E+03 | 1.7.E+00 | 0.0.E+00 | 2.0.E+02 | 2.2.E+04 | 0.3 | 439 | 93 | ◎ | 1 | ◎ |
| Ex.56 | 1.4.E+04 | 1.2.E+00 | 0.0.E+00 | 3.4.E+02 | 3.5.E+04 | 0.1 | 333 | 97 | ◎ | 0 | ◎ |
| Ex.57 | 8.6.E+03 | 0.3.E+00 | 0.0.E+00 | 2.1.E+02 | 2.2.E+04 | 0.3 | 332 | 95 | ◎ | 1 | ◎ |
| Ex.58 | 6.6.E+03 | 2.7.E+00 | 0.0.E+00 | 1.6.E+02 | 1.8.E+04 | 0.3 | 367 | 92 | ◎ | 1 | ◎ |
| Ex.59 | 6.9.E+03 | 2.6.E+00 | 0.0.E+00 | 1.6.E+02 | 2.0.E+04 | 0.4 | 465 | 94 | ◎ | 1 | ◎ |
| Ex.60 | 8.3.E+03 | 1.4.E+00 | 0.0.E+00 | 2.5.E+02 | 2.2.E+04 | 0.3 | 419 | 94 | ◎ | 1 | ◎ |
| Ex.61 | 6.7.E+03 | 2.8.E+00 | 0.0.E+00 | 8.0.E+01 | 1.9.E+04 | 0.7 | 319 | 90 | ◎ | 3 | ◎ |
| Ex.62 | 8.4.E+03 | 2.3.E+00 | 0.0.E+00 | 2.8.E+02 | 2.2.E+04 | 0.2 | 367 | 96 | ◎ | 1 | ◎ |
| Ex.63 | 9.0.E+03 | 1.4.E+00 | 0.0.E+00 | 1.2.E+02 | 2.1.E+04 | 0.5 | 410 | 92 | ◎ | 2 | ◎ |
| Ex.64 | 6.9.E+03 | 1.9.E+00 | 0.0.E+00 | 1.4.E+02 | 1.9.E+04 | 0.5 | 451 | 92 | ◎ | 2 | ◎ |
| Ex.65 | 6.8.E+03 | 1.0.E+00 | 0.0.E+00 | 5.4.E+01 | 2.0.E+04 | 0.8 | 382 | 90 | ◎ | 7 | Δ |
| Ex.66 | 7.7.E+03 | 2.9.E+00 | 0.0.E+00 | 1.8.E+02 | 2.0.E+04 | 0.4 | 389 | 92 | ◎ | 1 | ◎ |
| Ex.67 | 7.9.E+03 | 0.2.E+00 | 0.0.E+00 | 1.9.E+02 | 1.9.E+04 | 0.4 | 91 | 97 | ◎ | 6 | Δ |
| Ex.68 | 8.0.E+03 | 1.6.E+00 | 0.0.E+00 | 1.9.E+02 | 1.9.E+04 | 0.4 | 227 | 96 | ◎ | 2 | ◎ |
| CE19 | 1.3.E+03 | 2.1.E+02 | 0.0.E+00 | 3.1.E+01 | 3.3.E+03 | 0.7 | 73 | 98 | ◎ | 11 | × |
| CE20 | - | - | - | - | - | - | - | - | - | 10 | × |
| CE21 | 1.7.E+02 | 2.1.E+01 | 0.0.E+00 | 4.2.E+00 | 4.4.E+02 | 1.1 | 92 | 85 | ◎ | 23 | × |
| CE22 | 8.7.E+03 | 5.9.E+01 | 0.0.E+00 | 4.2.E+00 | 4.4.E+02 | 1.0 | 49 | 87 | ◎ | 24 | × |
| CE23 | 8.7.E+03 | 2.7.E+00 | 0.0.E+00 | 1.2.E+04 | 2.1.E+04 | 0.1 | 123 | 99 | ◎ | 10 | × |
| CE24 | 8.6.E+03 | 0.4.E+00 | 0.0.E+00 | 0.0.E+00 | 2.2.E+04 | 1.1 | 119 | 87 | ◎ | 19 | × |
| CE25 | 8.0.E+03 | 0.9.E+00 | 0.0.E+00 | 1.2.E+04 | 2.3.E+04 | 0.1 | 125 | 99 | ◎ | 10 | × |

(continued)

| | Surface Density of Si-based Intermetallic Compounds | | | Volume Density of Al-based Intermetallic Compounds | | Amount of Solid Solution Si | Grain Size After Heating for Bonding | Bonding Rate | | Deformation Rate | |
|---|---|---|---|---|---|---|---|---|---|---|---|
| | Equivalent Circle Diameter less than 5 $\mu$m (pieces/mm$^2$) | Equivalent Circle Diameter 5-10 $\mu$m (pieces/mm$^2$) | Equivalent Circle Diameter more than 10 $\mu$m (pieces/mm$^2$) | Equivalent Circle Diameter 0.01~0.5 $\mu$m (pieces/$\mu$m$^3$) | Equivalent Circle Diameter more than 0.5 $\mu$m (pieces/$\mu$m$^3$) | (mass%) | ($\mu$m) | (%) | | (%) | |
| CE26 | 7.9.E+03 | 1.6.E+00 | 0.0.E+00 | 0.0.E+00 | 2.3.E+04 | 1.1 | 110 | 86 | ◎ | 19 | × |

E+ in Table means exponential notation. For example, 1.3.E+04 means $1.3 \times 10^4$.
CE: Comparative Example

Next, each fin material was formed into a similar fin to that in the first embodiment. A test piece (mini-core) in three stages was then fabricated in a similar manner to that in the first embodiment (Fig. 3). After dipping the mini-core in a suspension containing 10 % of noncorrosive fluoride-based flux and drying it, the fins and the tubes were bonded to each other by heating the mini-core up to 600 °C in a nitrogen atmosphere, and by holding the heated state for a holding time of 3 min. The measurement of the grain sizes after the heating for the bonding, and the evaluation of the bonding performance and deformability were also performed in similar manners to those in the first embodiment. The obtained results are further listed in Table 9.

As seen from Tables 8 and 9, because the manufacturing process was under proper conditions in each of Examples 55 to 68, the final plate satisfied not only the ranges specified in the present invention on the density of the Al-based intermetallic compounds, the density of the Si-based intermetallic compounds, and the amount of solid solution Si, but also the reference values of the bonding rate and the deformation rate. Thus, the final plates of those Examples were acceptable.

In Comparative Example 19, because the rolling load during the casting was too small, the cooling rate was slowed down, the surface density of the Si-based intermetallic compounds having the equivalent circle diameters of 5 to 10 $\mu$m exceeded the specific range in the final plate, and the grain sizes after the heating were reduced. Accordingly, the evaluation result of the deformation rate was unacceptable.

In Comparative Example 20, because the rolling load was too large, supply of the molten metal was insufficient. Hence cracking occurred during the casting, and the manufacturing was unable to finish.

In Comparative Example 21, because the roll coating thickness during the casting was zero, the cooling rate was slowed down, the volume density of the Al-based intermetallic compounds having the equivalent circle diameters of 0.01 to 0.5 $\mu$m was below the specific range in the final plate, and the grain sizes after the heating were reduced. Furthermore, the amount of solid solution Si exceeded the specific range. Accordingly, the deformation rate was unacceptable.

In Comparative Example 22, because the roll coating thickness during the casting was too thick, the cooling rate was slowed down, the volume density of the Al-based intermetallic compounds having the equivalent circle diameters of 0.01 to 0.5 $\mu$m was below the specific range in the final plate, and the grain sizes after the heating were reduced. Furthermore, the amount of solid solution Si exceeded the specific range. Accordingly, the deformation rate was unacceptable.

In Comparative Example 23, because the temperature in the first annealing was low, the volume density of the Al-based intermetallic compounds having the equivalent circle diameters of 0.01 to 0.5 $\mu$m exceeded the specific range, and the deformation rate was unacceptable.

In Comparative Example 24, because the temperature in the first annealing was high, the volume density of the Al-based intermetallic compounds having the equivalent circle diameters of 0.01 to 0.5 $\mu$m was below the specific range, and the amount of solid solution Si exceeded the specific range. Accordingly, the deformation rate was unacceptable.

In Comparative Example 25, because the first annealing time was short, the volume density of the Al-based intermetallic compounds having the equivalent circle diameters of 0.01 to 0.5 $\mu$m exceeded the specific range, and the deformation rate was unacceptable.

In Comparative Example 26, because the first annealing time was long, the volume density of the Al-based intermetallic compounds having the equivalent circle diameters of 0.01 to 0.5 $\mu$m was below the specific range, and the amount of solid solution Si exceeded the specific range. Accordingly, the deformation rate was unacceptable.

Industrial Applicability

The aluminum alloy material having the thermal bonding function in a single layer, according to the present invention, is particularly useful as, e.g., a fin material in a heat exchanger, and it can be bonded to another member in the heat exchanger without using a bonding agent, such as a brazing or welding filler metal. Hence the heat exchanger can be manufacturing efficiently. When the aluminum alloy material according to the present invention is thermally bonded by the MONOBRAZE process, dimensions and shapes are hardly changed. The aluminum alloy material according to the present invention and a bonded body using the aluminum alloy material both have significant effects in industrial fields.

Reference Signs List

1...     molten metal of aluminum alloy
2...     region

2A... roll
2B... roll
3... roll centerline 3
4... nozzle tip
5... rolling region
6... non-rolling region
7... solidification start point
8... rolling load
9... meniscus portion

**Claims**

1. A method for manufacturing an aluminum alloy material having a thermal bonding function in a single layer, wherein the aluminum alloy material is made of an aluminum alloy comprising Si: 1.0 to 5.0 mass% and Fe: 0.01 to 2.0 mass%; and optionally comprising at least one of Mg: 0.05 to 2.0 mass%, Cu: 0.05 to 1.5 mass% and Mn: 0.05 to 2.0 mass%, at least one of Zn: 6.0 mass% or less, In: 0.3 mass% or less and Sn: 0.3 mass% or less, at least one of Ti: 0.3 mass% or less, V: 0.3 mass% or less, Cr: 0.3 mass% or less, Ni: 2.0 mass% or less and Zr: 0.3 mass% or less, at least one of Be: 0.1 mass% or less, Sr: 0.1 mass% or less, Bi: 0.1 mass% or less, Na: 0.1 mass% or less and Ca: 0.05 mass% or less,

   with the balance Al and inevitable impurities, the aluminum alloy material comprising 10 to $1 \times 10^4$ pieces/$\mu$m$^3$ of Al-based intermetallic compounds having equivalent circle diameters of 0.01 to 0.5 $\mu$m and 200 pieces/mm$^2$ or less of Si-based intermetallic compounds having equivalent circle diameters of 5.0 to 10 $\mu$m,

   the manufacturing method comprising the steps of: casting the aluminum alloy for the aluminum alloy material using a twin-roll continuous casting and rolling method; cold-rolling a rolled plate twice or more, and annealing the rolled plate during the cold rolling step once or more,
   wherein annealing conditions in all the annealing steps are set to 1 to 10 hours at temperature of 250 to 550 °C, and wherein a reduction rate in a final cold-rolling stage is 50 % or less,
   wherein, in the casting step using the twin-roll continuous casting and rolling method, the rolling is performed in a state that a coating having a thickness of 1 to 500 $\mu$m and containing, as main compositions, aluminum and aluminum oxide, is formed on the twin roll surfaces, and that a rolling load per 1 mm width of the rolled plate is 500 to 5000 N so that the coating thickness and the rolling load can be set to optimally adjust the cooling rate during the casting.

2. The manufacturing method for the aluminum alloy material having the thermal bonding function in a single layer according to Claim 1, wherein an amount of solid solution Si contained in the aluminum alloy is not more than 0.7 %.

3. The manufacturing method for the aluminum alloy material having the thermal bonding function in a single layer according to any one of Claims 1 to 2, wherein tensile strength before thermal bonding is 80 to 250 MPa.

**Patentansprüche**

1. Verfahren zur Herstellung eines Aluminiumlegierungsmaterials mit einer thermischen Verbindungsfunktion in einer Einzelschicht, wobei das Aluminiumlegierungsmaterial aus einer Aluminiumlegierung gefertigt ist, umfassend Si: 1,0 bis 5,0 Masse-% und Fe: 0,01 bis 2,0 Masse-%; und optional umfassend zumindest eines von Mg: 0,05 bis 2,0 Masse-%, Cu: 0,05 bis 1,5 Masse-% und Mn: 0,05 bis 2,0 Masse-%, zumindest eines von Zn: 6,0 Masse-% oder weniger, In: 0,3 Masse-% oder weniger und Sn: 0,3 Masse-% oder weniger, zumindest eines von Ti: 0,3 Masse-% oder weniger, V: 0,3 Masse-% oder weniger, Cr: 0,3 Masse-% oder weniger, Ni: 2,0 Masse-% oder weniger und Zr: 0,3 Masse-% oder weniger, zumindest eines von Be: 0,1 Masse-% oder weniger, Sr: 0,1 Masse-% oder weniger, Bi: 0,1 Masse-% oder weniger, Na: 0,1 Masse-% oder weniger und Ca: 0,05 Masse-% oder weniger,

   wobei der Rest Al und unvermeidbare Verunreinigungen sind, wobei das Aluminiumlegierungsmaterial 10 bis $1 \times 10^4$ Teile/$\mu$m$^3$ intermetallische Verbindungen auf Al-Basis mit Durchmessern eines äquivalenten Kreises zwischen 0,01 und 0,5 $\mu$m und 200 Teile/mm$^2$ oder weniger von intermetallischen Verbindungen auf Si-Basis mit Durchmessern eines äquivalenten Kreises zwischen 5,0 und 10 $\mu$m umfasst,
   wobei das Herstellungsverfahren folgende Schritte umfasst: Gießen der Aluminiumlegierung für das Aluminiumlegierungsmaterial unter Verwendung eines kontinuierlichen Zwei-Walzen-Gießwalzverfahrens; zweimaliges oder häufigeres Kaltwalzen einer gewalzten Platte und einmaliges oder mehrfaches Glühen der gewalzten Platte während des Kaltwalzschritts,

wobei die Glühbedingungen in sämtlichen Glühschritten auf 1 bis 10 Stunden bei einer Temperatur von 250 bis 550 °C eingestellt werden, und

wobei eine Reduktionsrate in einer abschließenden Kaltwalzstufe 50 % oder weniger beträgt,

wobei im Gießschritt unter Verwendung des kontinuierlichen Zwei-Walzen-Gießwalzverfahrens das Walzen in einem Zustand erfolgt, in dem auf den Oberflächen der zwei Walzen eine Beschichtung mit einer Dicke von 1 bis 500 $\mu$m, die als Hauptzusammensetzung Aluminium und Aluminiumoxid enthält, ausgebildet ist, und in dem eine Walzkraft pro 1 mm Breite der gewalzten Platte 500 bis 5000 N beträgt, sodass die Beschichtungsdicke und die Walzkraft so festgelegt werden können, dass die Abkühlrate während des Gießens optimal eingestellt wird.

**2.** Herstellungsverfahren für das Aluminiumlegierungsmaterial mit der thermischen Verbindungsfunktion in einer Einzelschicht nach Anspruch 1, wobei eine Menge von im Mischkristall gelöstem Si, das in der Aluminiumlegierung enthalten ist, nicht über 0,7 % beträgt.

**3.** Herstellungsverfahren für das Aluminiumlegierungsmaterial mit der thermischen Verbindungsfunktion in einer Einzelschicht nach Anspruch 1 oder 2, wobei die Zugfestigkeit vor der thermischen Verbindung 80 bis 250 MPa beträgt.

## Revendications

**1.** Procédé de fabrication d'un matériau d'alliage d'aluminium ayant une fonction de liaison thermique dans une monocouche, dans lequel le matériau d'alliage d'aluminium étant constitué d'un alliage d'aluminium comprenant Si: 1,0 à 5,0 % en masse et Fe: 0,01 à 2,0 % en masse ;

et comprenant éventuellement au moins un élément parmi Mg: 0,05 à 2,0 % en masse, Cu: 0,05 à 1,5 % en masse et Mn: 0,05 à 2,0 % en masse, au moins un élément parmi Zn: 6,0 % en masse ou moins, In: 0,3 % en masse ou moins et Sn: 0,3 % en masse ou moins, au moins un élément parmi Ti: 0,3 % en masse ou moins, V: 0,3 % en masse ou moins, Cr: 0,3 % en masse ou moins, Ni: 2,0 % en masse ou moins et Zr: 0,3 % en masse ou moins, au moins un élément parmi Be: 0,1 % en masse ou moins, Sr: 0,1 % en masse ou moins, Bi: 0,1 % en masse ou moins, Na: 0,1 % en masse ou moins et Ca: 0,05 % en masse ou moins,

le reste étant Al et les inévitables impuretés, le matériau d'alliage d'aluminium comprenant 10 à $1 \times 10^4$ morceaux/$\mu$m$^3$ de composés intermétalliques à base d'Al ayant des diamètres de cercle équivalent de 0,01 à 0,5 $\mu$m et 200 morceaux/mm$^2$ ou moins de composés intermétalliques à base de Si ayant des diamètres de cercle équivalent de 5,0 à 10 $\mu$m,

le procédé de fabrication comprenant les étapes consistant à: couler l'alliage d'aluminium pour le matériau d'alliage d'aluminium en utilisant un procédé de coulée continue et de laminage à deux rouleaux; laminage à froid une plaque laminée deux fois ou plus, et recuit de la plaque laminée pendant l'étape de laminage à froid une ou plusieurs fois, dans lequel les conditions de recuit à toutes les étapes de recuit sont réglées sur 1 à 10 heures à une température de 250 à 550 °C, et

dans lequel un taux de réduction dans une phase finale de laminage à froid est de 50 % ou moins,

dans lequel, à l'étape de coulée utilisant le procédé de coulée continue et de laminage à deux rouleaux, le laminage est effectué dans un état tel qu'un revêtement ayant une épaisseur de 1 à 500 $\mu$m et contenant, comme principaux constituants, de l'aluminium et de l'oxyde d'aluminium, est formé sur les surfaces des deux rouleaux, et qu'une charge de laminage par largeur de 1 mm de la plaque laminée est de 500 à 5000 N, de sorte que l'épaisseur de revêtement et la charge de laminage peuvent être réglées pour ajuster de façon optimale la vitesse de refroidissement pendant la coulée.

**2.** Procédé de fabrication du matériau d'alliage d'aluminium ayant la fonction de liaison thermique dans une monocouche selon la revendication 1, dans lequel une quantité de Si en solution solide contenu dans l'alliage d'aluminium ne dépasse pas 0,7 %.

**3.** Procédé de fabrication du matériau d'alliage d'aluminium ayant la fonction de liaison thermique dans une monocouche selon l'une quelconque des revendications 1 à 2, dans lequel la résistance à la traction avant liaison thermique est de 80 à 250 MPa.

FIG. 1

FIG. 2

Bolt (AA)

Stainless-steel
Plate (BB)

Fin (CC)

Tube (DD)

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008303405 A
- JP 2009161835 A
- JP 2008308760 A
- JP 2010168613 A
- JP 5021097 B
- JP 2012051028 A

**Non-patent literature cited in the description**

- Aluminum Brazing Handbook (Revised). THE JAPAN LIGHT METAL WELDING AND CONSTRUCTION ASSOCIATION, 2003